# EUROPEAN PATENT APPLICATION

(11) **EP 4 318 268 A1**
(43) Date of publication of application: **07.02.2024**
(21) Application number: 21934984.2
(22) Date of filing: 31.03.2021
(51) Int. Cl.: G06F 16/332, G06F 16/36

(54) **INFORMATION PROCESSING PROGRAM, INFORMATION PROCESSING METHOD, INFORMATION PROCESSING DEVICE, AND INFORMATION PROCESSING SYSTEM**

(71) Applicant: FUJITSU LIMITED, Kawasaki-shi, Kanagawa 211-8588 (JP)
(72) Inventor: KATAE, Nobuyuki, Kawasaki-shi, Kanagawa 211-8588 (JP)
(74) Representative: Hoffmann Eitle
(86) International application number: PCT/JP2021/014064
(87) International publication number: WO 2022/208822

(57) **Abstract**

An information processing device (101) extracts a named-entity including a hypernym from a document (d#). The information processing device (101) specifies a modifier character string that modifies the extracted hypernym from the document (d#). The information processing device (101) generates a search application condition for a knowledge graph (KG), based on the type and content of the named-entity included in the specified modifier character string. The knowledge graph (KG) is, for example, information obtained by forming a directed graph with knowledge regarding compounds as nodes and relationships between nodes as edges. The information processing device (101) searches the knowledge graph (KG) for a hyponym relevant to the extracted hypernym in accordance with the generated search application condition. The information processing device (101) associates the extracted hypernym with the hyponym found in the search.

## Description

### FIELD

The present disclosure relates to an information processing program, an information processing method, an information processing device, and an information processing system.

### BACKGROUND

In documents in the chemical field, it is useful to display related parts in an easy-to-understand manner in consideration of superordinate-subordinate relationships of compounds, similar compounds, and the like, in order to help interpreting the content. For example, there is a case where a hypernym (such as the generic name of a compound) and a hyponym (such as the compound name) contained in a document are extracted and associated using a knowledge graph constructed in advance.

As a prior technique, for example, there is a technique for linking nodes indicating abstract compound names. In addition, there is a technique of constructing an event knowledge database by a predefined event knowledge structure. Furthermore, there is a technique of extracting semantic information on a word group with reference to a knowledge graph describing information regarding things and information regarding semantic relationships between things, and providing a query candidate based on the extracted semantic information on the word group to a terminal device used by a user. There is also a technique for improving the accuracy of specifying a compound name included in a sentence.

### SUMMARY

### TECHNICAL PROBLEM

However, in the conventional techniques, an inappropriate hyponym is sometimes associated with a hypernym such as a generic name of a compound. For example, in a document in the chemical field, if an inappropriate compound name is associated with a generic name of a compound, not only the user is not allowed to be assisted in interpreting the content but also misleading is likely to occur.

In one aspect, an object of the present disclosure is to appropriately associate a hypernym with a hyponym.

### SOLUTION TO PROBLEM

In one form of embodiment, there is provided an information processing program that: extracts named-entities that include a hypernym from a document; specifies a modifier character string that modifies the extracted hypernym from the document; generates conditions to be applied when a knowledge graph is searched for a hyponym relevant to the extracted hypernym, based on a type and content of the named-entities included in the specified modifier character string; searches the knowledge graph for the hyponym in accordance with the generated conditions; and associates the extracted hypernym with the hyponym found in the search.

In addition, in one form of embodiment, there is provided an information processing program that: extracts named-entities that include a hypernym from a lookup query; specifies a modifier character string that modifies the extracted hypernym from the lookup query; generates conditions to be applied when a knowledge graph is searched for a hyponym relevant to the extracted hypernym, based on a type and content of the named-entities included in the specified modifier character string; searches the knowledge graph for the hyponym in accordance with the generated conditions; and sets the extracted hypernym and the hyponym found in the search as lookup keywords for when performing a lookup for a document according to the lookup query.

### ADVANTAGEOUS EFFECTS OF INVENTION

According to one aspect of the present disclosure, an effect of enabling to appropriately associate a hypernym with a hyponym may be achieved.

### BRIEF DESCRIPTION OF DRAWINGS

FIG. 1 is an explanatory diagram illustrating a working example of an information processing method according to a first embodiment.
FIG. 2 is an explanatory diagram illustrating a system configuration example of an information processing system 200.
FIG. 3 is a block diagram indicating a hardware configuration example of a document analysis device 201.
FIG. 4 is an explanatory diagram illustrating a specific example of a knowledge graph KG.
FIG. 5 is an explanatory diagram illustrating an example of the storage contents of a named-entity-knowledge graph correspondence table 220.
FIG. 6 is an explanatory diagram illustrating a specific example of a document d.
FIG. 7 is a block diagram illustrating a functional configuration example of a document analysis device 201 according to a first embodiment.
FIG. 8 is an explanatory diagram illustrating an example of a modification relationship analysis result for the document d.
FIG. 9A is an explanatory diagram (part 1) illustrating an example of generating a search application condition for the knowledge graph KG.
FIG. 9B is an explanatory diagram (part 2) illustrating an example of generating a search application condition for the knowledge graph KG.
FIG. 10A is an explanatory diagram (part 1) illustrating an example of searching for a hyponym relevant to a hypernym.
FIG. 10B is an explanatory diagram (part 2) illustrating an example of searching for a hyponym relevant to a hypernym.
FIG. 11 is an explanatory diagram illustrating a specific example of a search result.
FIG. 12 is an explanatory diagram illustrating a display example of association between hypernyms and hyponyms in the document d.
FIG. 13 is a flowchart illustrating an example of a reading comprehension support processing procedure of the document analysis device 201 according to the first embodiment.
FIG. 14 is a flowchart illustrating an example of a specific processing procedure of a search application condition generation process.
FIG. 15 is a flowchart illustrating an example of a specific processing procedure of an association process.
FIG. 16 is an explanatory diagram illustrating a specific example of different documents d.
FIG. 17 is a block diagram illustrating a functional configuration example of a document analysis device 201 according to a second embodiment.
FIG. 18A is an explanatory diagram illustrating an example of a modification relationship analysis result for a document d2.
FIG. 18B is an explanatory diagram illustrating an example of a modification relationship analysis result for a document d3.
FIG. 19A is an explanatory diagram (part 3) illustrating an example of generating a search application condition for a knowledge graph KG.
FIG. 19B is an explanatory diagram (part 4) illustrating an example of generating a search application condition for a knowledge graph KG.
FIG. 20 is an explanatory diagram illustrating an example of changing the search application condition.
FIG. 21A is an explanatory diagram (part 3) illustrating an example of searching for a hyponym relevant to a hypernym.
FIG. 21B is an explanatory diagram (part 4) illustrating an example of searching for a hyponym relevant to a hypernym.
FIG. 21C is an explanatory diagram (part 5) illustrating an example of searching for a hyponym relevant to a hypernym.
FIG. 22 is an explanatory diagram illustrating a specific example of a search result.
FIG. 23 is an explanatory diagram illustrating a display example of association between hypernyms and hyponyms in different documents d.
FIG. 24 is a flowchart (part 1) illustrating an example of a reading comprehension support processing procedure of the document analysis device 201 according to the second embodiment.
FIG. 25 is a flowchart (part 2) illustrating an example of a reading comprehension support processing procedure of the document analysis device 201 according to the second embodiment.
FIG. 26 is a flowchart (part 1) illustrating an example of a specific processing procedure of a second search application condition generation process.
FIG. 27 is a flowchart (part 2) illustrating an example of a specific processing procedure of a second search application condition generation process.
FIG. 28 is a flowchart illustrating an example of a specific processing procedure of a second association process.
FIG. 29 is a block diagram illustrating a functional configuration example of a document lookup device 2900 according to a third embodiment.
FIG. 30 is an explanatory diagram illustrating a display example of a lookup result of a lookup performed according to a lookup query.
FIG. 31 is a flowchart illustrating an example of a document lookup processing procedure of the document lookup device 2900 according to the third embodiment.

### DESCRIPTION OF EMBODIMENTS

Hereinafter, embodiments of an information processing program, an information processing method, an information processing device, and information processing system according to the present disclosure will be described in detail with reference to the drawings.

### (First Embodiment)

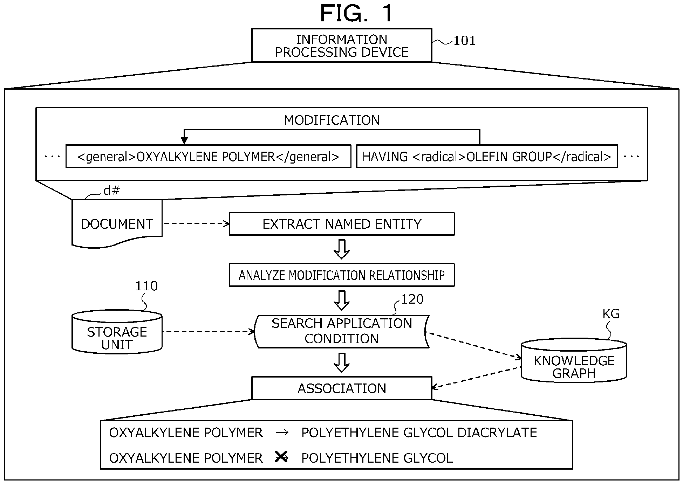

FIG. 1 is an explanatory diagram illustrating a working example of an information processing method according to a first embodiment. In FIG. 1, an information processing device 101 is a computer that associates a hypernym with a hyponym. The hypernym is a word representing a superordinate concept and refers to a more generic and more abstract idea than the hyponym. The hyponym is a word representing a subordinate concept and refers to a more particular and more specific idea than the hypernym. For example, when a word A is a hypernym of a word B, the meaning of the word A includes the meaning of the word B.

Here, in research of patent, thesis literature, or the like in the chemical field of materials, chemicals, and the like, it is useful to display related parts in documents in an easy-to-understand manner in order to help interpreting the content. In addition, when displaying the compounds contained in a certain document in association with each other, it is desirable to perform association in consideration of not only the matching of the names of the compounds but also the superordinate-subordinate relationships of the compounds and similar compounds.

Therefore, it is conceivable to extract and associate the hypernyms and hyponyms contained in a document using a knowledge graph constructed based on information extracted from a large amount of literature and a database. The knowledge graph is constructed by, for example, extracting named-entities from patent, thesis literature, or the like, specifying a relationship in each "named-entity" (may be referred to as "proper expression"), and graphing the relationships. The hypernym is, for example, a generic name of a compound. The hyponym is, for example, a particular compound name of a compound. The particular compound name is, for example, a specific compound name that may uniquely point to the structure. In the following description, the particular compound name that is a hyponym of a generic name of a compound will be sometimes simply referred to as a "compound name".

For example, by extracting and associating the hypernym "oxyalkylene polymer" and the hyponym "polyethylene glycol diacrylate" contained in a document using a knowledge graph, association between the generic name and the compound name can be displayed in the document. For example, by extracting and associating the hypernym "aliphatic alcohol" and the hyponym "1-propanol" contained in a document using a knowledge graph, association between the generic name and the compound name can be displayed in the document.

However, focusing only on the relationship between the hypernym and the hyponym sometimes causes inappropriate association when the hypernym is limited in its properties, attributes, physical properties, and the like. For example, it is assumed that "oxyalkylene polymer" that is a hypernym is limited in the property to "having an olefin group". In these circumstances, for example, polyethylene glycol, polypropylene glycol, and the like are the hyponyms of the oxyalkylene polymer, but do not include an olefin group, and thus are inappropriate for association.

In addition, it is assumed that "aliphatic alcohol" that is a hypernym is limited in the physical property to "a number of carbons of three or four". In these circumstances, for example, 1-hexanol, 2-hexanol, and the like are the hyponyms of aliphatic alcohols, but are inappropriate for association because the number of carbons is five.

Accordingly, in the first embodiment, an information processing method of associating an appropriate hyponym with a hypernym in consideration of a character string that modifies the hypernym in a document will be described. Hereinafter, a processing example of the information processing device 101 will be described.
(1) The information processing device 101 extracts a named-entity including a hypernym from a document d. Here, the document d is document data regarded as an analysis object and is, for example, obtained by digitizing patent, thesis literature, or the like in the chemical field. The named-entity is a proper noun, a numerical expression, or the like. The hypernym is, for example, a generic name of a compound.

Specifically, for example, the information processing device 101 extracts a named-entity of a predefined type from the document d. Examples of the type of the named-entity include a generic name (hypernym) of a compound, a compound name, a substituent name, a substructure name, a physical property name, a physical property value, a usage name, and the like. The compound name corresponds to a hyponym relevant to the generic name (hypernym) of a compound.

(2) The information processing device 101 specifies a modifier character string that modifies the extracted hypernym from the document d. The modifier character string is, for example, a modifier phrase or an attributive modifier clause for the hypernym. Specifically, for example, the information processing device 101 analyzes a modification relationship by performing syntax parsing, dependency parsing, and the like, thereby specifying a modifier character string that modifies the hypernym, such as a modifier phrase or an attributive modifier clause, from the document d.

(3) The information processing device 101 generates a search application condition for a knowledge graph KG, based on the type and content of the named-entity included in the specified modifier character string. Here, the knowledge graph KG is information representing a connection of knowledge in a graph structure and is, for example, obtained by forming a directed graph with knowledge regarding compounds as nodes and relationships between nodes as edges.

Examples of the knowledge include a generic name of a compound, a compound name, an attribute (such as a substituent), a physical property (such as the number of carbons), a chemical structure (such as a structural formula), and the like. The relationship between nodes is represented by an edge (arrow) including a meaning. For example, the edge represents a superordinate-subordinate relationship, characteristics, an attribute, a physical property, a substructure, a usage, or the like of the compound.

The search application condition is a condition to be applied when the knowledge graph KG is searched for a hyponym relevant to the hypernym. Specifically, for example, the information processing device 101 refers to a storage unit 110 to generate the search application condition, based on the type and content of the named-entity included in the specified modifier character string. The storage unit 110 stores, for example, information capable of specifying a search object node according to the type and content of the named-entity included in the phrase or clause that modifies the generic name (hypernym) of a compound.

In the example in FIG. 1, the hypernym extracted from a document d# is assumed to be "oxyalkylene polymer", which is a generic name (general) of a compound. The document d# is an example of the document d. In addition, the type of the named-entity included in the modifier character string that modifies the hypernym is assumed to be "substituent (radical)", and the content of the named-entity is assumed to be "olefin group".

In these circumstances, for example, a search application condition 120 is generated as the search application condition for the knowledge graph. The search application condition 120 is a condition that a node coupled to a node indicating the "olefin group" by an edge indicating the "substituent" among nodes indicating hyponyms of the "oxyalkylene polymer" is assigned as a search object.

(4) The information processing device 101 searches the knowledge graph KG for a hyponym relevant to the extracted hypernym in accordance with the generated search application condition. Specifically, for example, the information processing device 101 searches the knowledge graph KG for a hyponym indicated by a node meeting the search application condition 120.

(5) The information processing device 101 associates the extracted hypernym with the hyponym found in the search. Specifically, for example, the information processing device 101 performs a lookup in the document d# for the hyponym found in the search. Then, the information processing device 101 may associate the extracted hypernym in the document d# with the hyponym found in the lookup in the document d#.

In the example in FIG. 1, a case is supposed in which "polyethylene glycol diacrylate" that is a hyponym of "oxyalkylene polymer" and has an olefin group as a substituent is found in the search from the knowledge graph KG as a hyponym indicated by a node meeting the search application condition 120. In this case, the hypernym "oxyalkylene polymer" is associated with the hyponym "polyethylene glycol diacrylate".

In this manner, according to the information processing device 101, even when the generic name (hypernym) of a compound is limited in its properties, physical properties, and the like, the generic name (hypernym) and the compound name (hyponym) may be appropriately associated in consideration of the character string that modifies the generic name (hypernym).

In the example in FIG. 1, the compound name "polyethylene glycol diacrylate" of a compound having an olefin group can be associated with the generic name "oxyalkylene polymer" of a compound in the document d#. In addition, the compound name of a compound that does not include an olefin group although it is a hyponym of the generic name "oxyalkylene polymer", such as "polyethylene glycol", may be avoided from being associated.

### (System Configuration Example of Information Processing System 200)

Next, a system configuration example of an information processing system 200 according to the first embodiment will be described. Here, a case where the information processing device 101 illustrated in FIG. 1 is applied to a document analysis device 201 in the information processing system 200 will be taken as an example and described. The information processing system 200 is applied to, for example, a computer system that supports reading comprehension of documents in the chemical field.

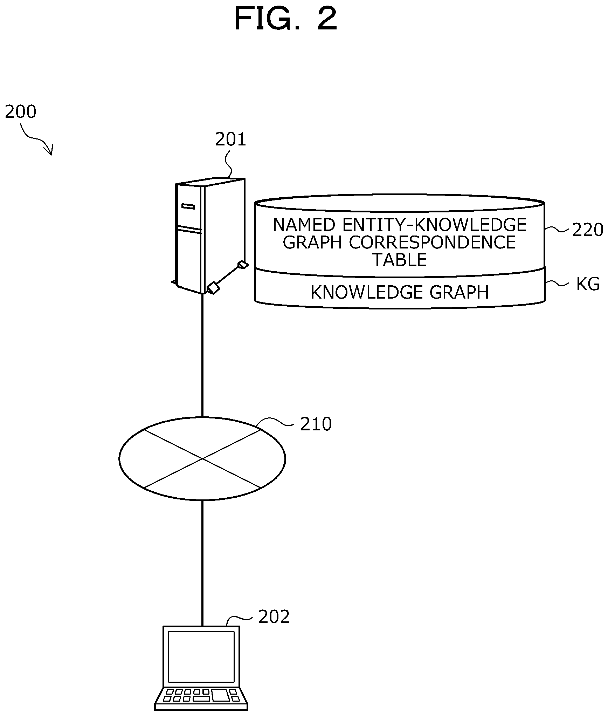

FIG. 2 is an explanatory diagram illustrating a system configuration example of the information processing system 200. In FIG. 2, the information processing system 200 includes the document analysis device 201 and a client device 202. In the information processing system 200, the document analysis device 201 and the client device 202 are coupled via a wired or wireless network 210. For example, the network 210 is the Internet, a local area network (LAN), a wide area network (WAN), or the like.

Here, the document analysis device 201 is a computer that includes the knowledge graph KG and a named-entity-knowledge graph correspondence table 220 and supports reading comprehension of the document d. For example, the document analysis device 201 is a server, a personal computer (PC), or the like.

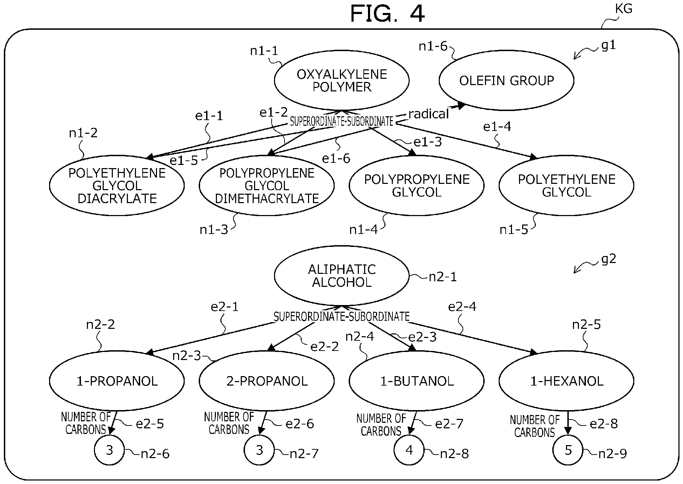

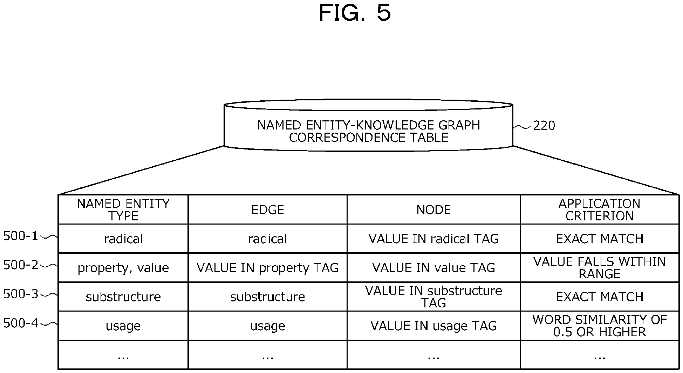

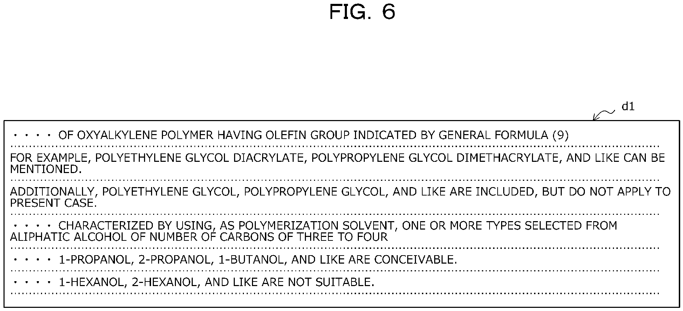

A specific example of the knowledge graph KG will be described later with reference to FIG. 4. The storage contents of the named-entity-knowledge graph correspondence table 220 will also be described later with reference to FIG. 5. The storage unit 110 illustrated in FIG. 1 corresponds to, for example, the named-entity-knowledge graph correspondence table 220. In addition, a specific example of the document d will be described later with reference to FIG. 6.

Note that the knowledge graph KG and the named-entity-knowledge graph correspondence table 220 may be included in another computer accessible by the document analysis device 201. In these circumstances, the document analysis device 201 accesses the knowledge graph KG and the named-entity-knowledge graph correspondence table 220 via the another computer.

The client device 202 is a computer used by a user. The user is, for example, a person who performs research of patent, thesis literature, or the like in the chemical field. Examples of the client device 202 include a PC, a tablet PC, a smartphone, and the like.

Note that, here, the document analysis device 201 and the client device 202 are assumed to be provided separately, but the document analysis device 201 may be implemented by the client device 202. In addition, the information processing system 200 may include, for example, a plurality of the document analysis devices 201 or a plurality of the client devices 202.

### (Hardware Configuration Example of Document Analysis Device 201)

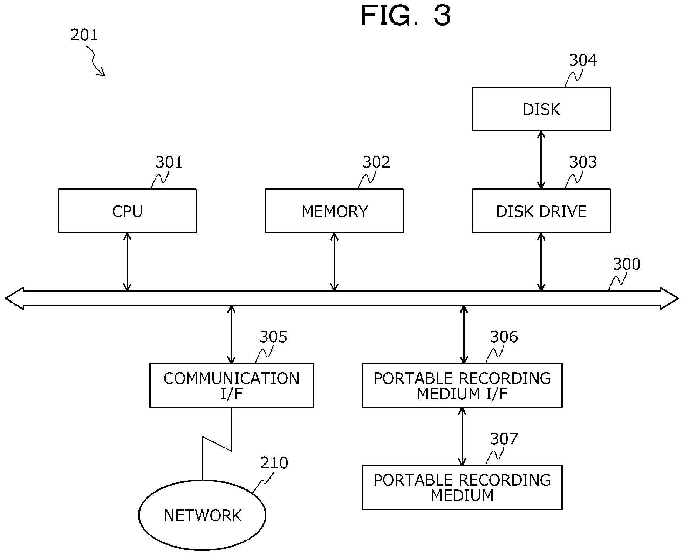

FIG. 3 is a block diagram indicating a hardware configuration example of the document analysis device 201. In FIG. 3, the document analysis device 201 includes a central processing unit (CPU) 301, a memory 302, a disk drive 303, a disk 304, a communication interface (I/F) 305, a portable recording medium I/F 306, and a portable recording medium 307. In addition, the individual components are coupled to each other by a bus 300.

Here, the CPU 301 takes overall control of the document analysis device 201. The CPU 301 may include a plurality of cores. For example, the memory 302 includes a read only memory (ROM), a random access memory (RAM), a flash ROM, and the like. Specifically, for example, the flash ROM stores an operating system (OS) program, the ROM stores an application program, and the RAM is used as a work area for the CPU 301. The program stored in the memory 302 is loaded into the CPU 301 to cause the CPU 301 to execute coded processing.

The disk drive 303 controls reading and writing of data from and to the disk 304 under the control of the CPU 301. The disk 304 stores data written under the control of the disk drive 303. As examples of the disk 304, a magnetic disk, an optical disc, and the like can be mentioned.

The communication I/F 305 is coupled to the network 210 through a communication line and is coupled to an external computer (such as the client device 202 illustrated in FIG. 2) via the network 210. Then, the communication I/F 305 takes control of an interface between the network 210 and the inside of the device and controls input and output of data from an external computer. For example, a modem, a LAN adapter, or the like can be employed as the communication I/F 305.

The portable recording medium I/F 306 controls reading and writing of data from and to the portable recording medium 307 under the control of the CPU 301. The portable recording medium 307 stores data written under the control of the portable recording medium I/F 306. As examples of the portable recording medium 307, a compact disc (CD)-ROM, a digital versatile disk (DVD), a universal serial bus (USB) memory, and the like can be mentioned.

Note that, for example, the document analysis device 201 may include an input device, a display, or the like, as well as the components described above. In addition, also the client device 202 illustrated in FIG. 2 can be implemented by a hardware configuration similar to the hardware configuration of the document analysis device 201. However, for example, the client device 202 includes an input device, a display, or the like as well as the components described above.

### (Specific Example of Knowledge Graph KG)

Next, a specific example of the knowledge graph KG included in the document analysis device 201 will be described with reference to FIG. 4. The knowledge graph KG is implemented by, for example, a storage device such as the memory 302 or the disk 304 illustrated in FIG. 3.

FIG. 4 is an explanatory diagram illustrating a specific example of the knowledge graph KG. In FIG. 4, the knowledge graph KG is a knowledge base obtained by forming a directed graph with knowledge regarding compounds as nodes and relationships between nodes as edges. The knowledge graph KG includes graphs g1 and g2. However, in FIG. 4, a part of the knowledge graph KG is displayed as an excerpt.

The graph g1 includes nodes n1-1 to n1-6 and edges e1-1 to e1-6. The edges e1-1 to e1-4 indicate superordinate-subordinate relationships. The coupling source nodes of the edges e1-1 to e1-4 indicate hypernyms. The coupling destination nodes of the edges e1-1 to e1-4 indicate hyponyms. For example, the nodes n1-1 and n1-2 are coupled to each other by the edge e1-1 indicating a superordinate-subordinate relationship, which indicates a relationship between the hypernym "oxyalkylene polymer" and the hyponym "polyethylene glycol diacrylate".

The edges e1-5 and e1-6 indicate substituents (marked as radical in the drawing). The coupling source nodes of the edges e1-5 and e1-6 indicate compounds. The coupling destination node of the edges e1-5 and e1-6 indicates a substituent that the compounds have. For example, the nodes n1-2 and n1-6 are coupled to each other by the edge e1-5 indicating a substituent, which indicates the relationship between the compound "polyethylene glycol diacrylate" and the substituent "olefin group".

The graph g2 includes nodes n2-1 to n2-9 and edges e2-1 to e2-8. The edges e2-1 to e2-4 indicate superordinate-subordinate relationships. For example, the nodes n2-1 and n2-2 are coupled to each other by the edge e2-1 indicating a superordinate-subordinate relationship, which indicates a relationship between the hypernym "aliphatic alcohol" and the hyponym "1-propanol".

The edges e2-5 to e2-8 indicate the number of carbons. The coupling source nodes of the edges e2-5 to e2-8 indicate compounds. The coupling destination nodes of the edges e2-5 to e2-8 indicate the number of carbons that the compounds have. For example, the nodes n2-2 and n2-6 are coupled to each other by the edge e2-5 indicating the number of carbons, which indicates a relationship between the compound °1-propanol" and the number of carbons "3".

### (Storage Contents of Named-entity-Knowledge Graph Correspondence Table 220)

Next, the storage contents of the named-entity-knowledge graph correspondence table 220 will be described with reference to FIG. 5. The named-entity-knowledge graph correspondence table 220 is implemented by, for example, a storage device such as the memory 302 or the disk 304 illustrated in FIG. 3.

FIG. 5 is an explanatory diagram illustrating an example of the storage contents of the named-entity-knowledge graph correspondence table 220. In FIG. 5, the named-entity-knowledge graph correspondence table 220 has fields of a named-entity type, an edge, a node, and an application criterion and stores search application condition information (for example, search application condition information 500-1 to 500-4) as records by setting information in each field.

Here, the named-entity type denotes the type of a named-entity included in a modifier phrase or an attributive modifier clause that modifies a hypernym. For example, a substituent name is indicated by "radical". A physical property name is indicated by "property". A physical property value is indicated by "value". A substructure name is indicated by "substructure". A usage name is indicated by "usage".

The edge, the node, and the application criterion are information that specify another node coupled to a node regarded as a search object in the knowledge graph KG via the edge.

For example, the search application condition information 500-1 indicates, as a search application condition when the named-entity type is "radical", a condition that a node to which another node indicating a value exactly matching the value in a radical tag is coupled via an edge indicating "radical" is searched for. Note that the value in the tag indicates a value (content) extracted as a named-entity.

In addition, the search application condition information 500-2 indicates, as a search application condition when the named-entity type is "property" and "value", a condition that a node to which another node indicating a value falling within the range of the values in a value tag is coupled via an edge indicating "value in property tag" is searched for.

In addition, the search application condition information 500-3 indicates, as a search application condition when the named-entity type is "substructure", a condition that a node to which another node indicating a value exactly matching the value in a substructure tag is coupled via an edge indicating "substructure" is searched for.

In addition, the search application condition information 500-4 indicates, as a search application condition when the named-entity type is "usage", a condition that a node to which another node indicating a word having a similarity of 0.5 or higher to the value in a usage tag is coupled via an edge indicating "usage" is searched for. Note that any existing approach may be used to calculate the similarity between character strings.

### (Specific Example of Document d)

Next, a specific example of the document d will be described with reference to FIG. 6.

FIG. 6 is an explanatory diagram illustrating a specific example of the document d. In FIG. 6, a document d1 is an example of document data obtained by digitizing a patent, a thesis, or the like in the chemical field. In the document d1, a generic name (such as oxyalkylene polymer) of a compound, a compound name (such as polyethylene glycol diacrylate), and the like are described. However, in FIG. 6, a part of the document d1 is displayed as an excerpt.

### (Functional Configuration Example of Document Analysis Device 201)

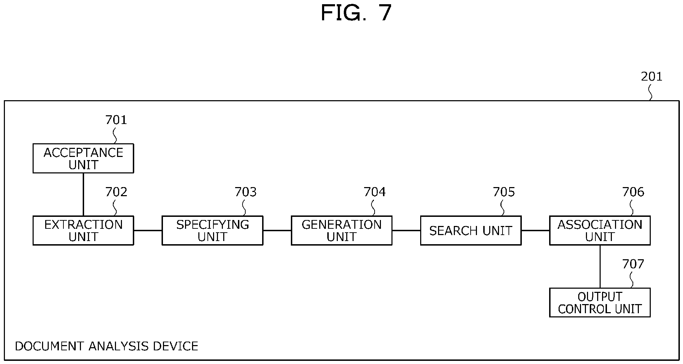

Next, a functional configuration example of the document analysis device 201 according to the first embodiment will be described with reference to FIG. 7.

FIG. 7 is a block diagram illustrating a functional configuration example of the document analysis device 201 according to the first embodiment. In FIG. 7, the document analysis device 201 includes an acceptance unit 701, an extraction unit 702, a specifying unit 703, a generation unit 704, a search unit 705, an association unit 706, and an output control unit 707. The acceptance unit 701 through the output control unit 707 have functions to serve as a control unit, and specifically, for example, those functions are implemented by causing the CPU 301 to execute a program stored in a storage device such as the memory 302, the disk 304, or the portable recording medium 307 or by the communication I/F 305 illustrated in FIG. 3. A processing result of each functional unit is stored, for example, in a storage device such as the memory 302 or the disk 304.

The acceptance unit 701 accepts an input of the document d. The document d is document data regarded as an analysis object and is, for example, the document d1 illustrated in FIG. 6. Specifically, for example, the acceptance unit 701 accepts an input of the document d1 by receiving the document d1 from the client device 202 (see FIG. 2).

In addition, the acceptance unit 701 may acquire the designated document d1 from a document database (DB) (not illustrated) by accepting the designation of the document d1 from the client device 202. The acceptance unit 701 may also accept an input of the document d1 by an operation input from a user using an input device (not illustrated).

The extraction unit 702 extracts the named-entity including a hypernym from the document d. Specifically, for example, the extraction unit 702 extracts a named-entity of a predefined type from the document d1. Examples of the type of the named-entity include a generic name (hypernym) of a compound, a compound name (hyponym), a substituent name, a substructure name, a physical property name, a physical property value, a usage name, and the like.

The specifying unit 703 specifies a modifier character string that modifies the extracted hypernym from the document d. The modifier character string is, for example, a modifier phrase or an attributive modifier clause for the hypernym. The hypernym is, for example, a generic name of a compound. The hyponym relevant to the generic name is, for example, a compound name of a compound. Specifically, for example, the specifying unit 703 performs syntax parsing, dependency parsing, and the like on the document d1 and specifies a modifier character string that modifies the hypernym from the document d1, based on the result of the parsing.

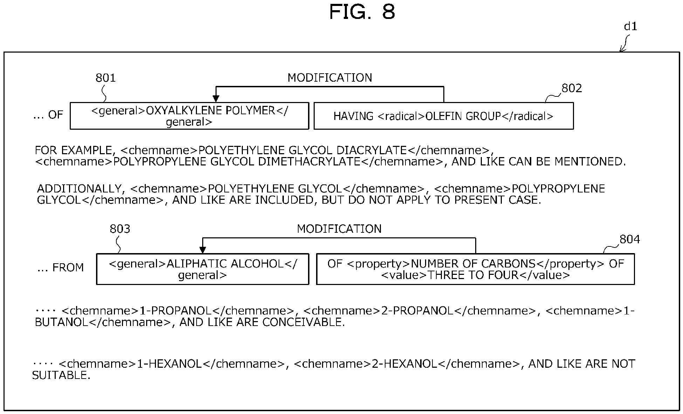

Note that the analysis result for the modification relationship in the document d1 will be described later with reference to FIG. 8.

The generation unit 704 generates the search application condition for the knowledge graph KG. Here, the search application condition is a condition to be applied when the knowledge graph KG is searched for a hyponym relevant to the extracted hypernym. Specifically, for example, the generation unit 704 generates the search application condition, based on the type and content of the named-entity included in the specified modifier character string.

To describe in more detail, for example, when a modifier character string that modifies the extracted hypernym is specified, the generation unit 704 determines whether or not the specified modifier character string includes a named-entity. Here, when a named-entity is included in the modifier character string, the generation unit 704 specifies the type and content of the included named-entity.

Next, the generation unit 704 refers to the named-entity-knowledge graph correspondence table 220 (see FIG. 5) to acquire the search application condition information corresponding to the specified type of the named-entity. Then, the generation unit 704 refers to the acquired search application condition information to generate a search application condition according to the specified content of the named-entity.

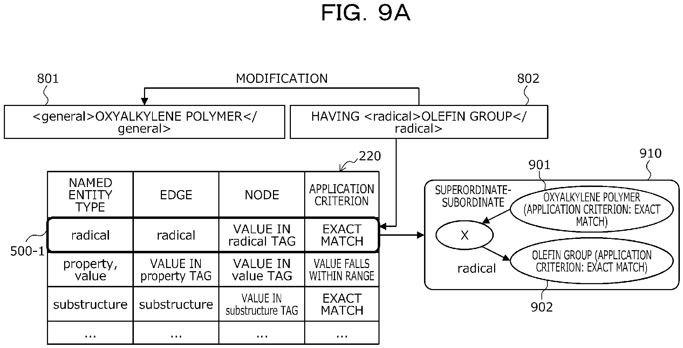

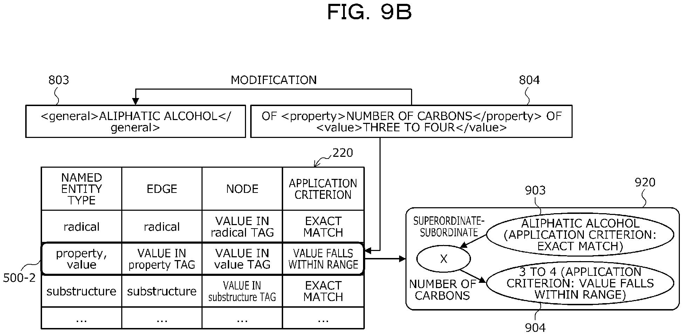

Note that an example of generating the search application condition will be described later with reference to FIGs. 9A and 9B.

Note that, when no modifier character string that modifies the hypernym is specified, for example, the generation unit 704 may generate a search application condition for searching the knowledge graph KG for a hyponym relevant to the extracted hypernym without limitation. In addition, when no named-entity is included in the modifier character string, the generation unit 704 may generate a search application condition for searching the knowledge graph KG for a hyponym relevant to the extracted hypernym without limitation.

The search unit 705 searches the knowledge graph KG for a hyponym relevant to the extracted hypernym in accordance with the generated search application condition. Specifically, for example, the search unit 705 searches the knowledge graph KG for a node meeting the generated search application condition. Then, the search unit 705 acquires the hyponym indicated by the node found in the search as a hyponym (compound name) relevant to the extracted hypernym (generic name).

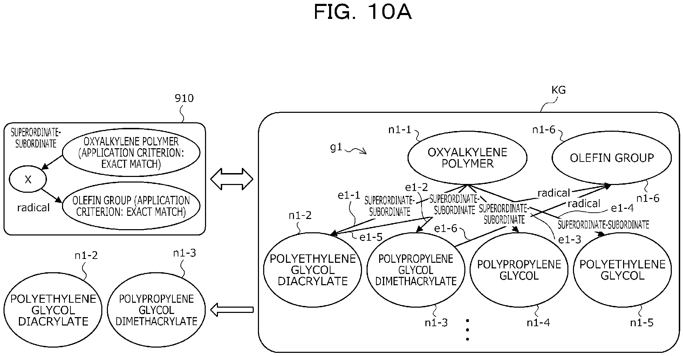

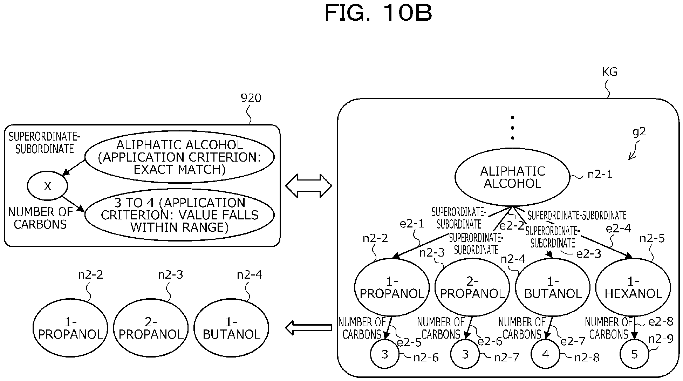

Note that an example of searching for a hyponym (compound name) relevant to the hypernym (generic name) will be described later with reference to FIGs. 10A and 10B.

The association unit 706 associates the extracted hypernym with the hyponym found in the search. Specifically, for example, the association unit 706 performs a lookup in the document d for the hyponym found in the search. Then, the association unit 706 may associate the extracted hypernym in the document d with the hyponym found in the lookup in the document d.

When displaying the document d, the output control unit 707 displays the document d such that association between the hypernym and the hyponym in the document d that have been associated is specifiable. In the document d, the association between the hypernym and the hyponym may be expressed by, for example, an arrow or a line segment connecting the hypernym and the hyponym, or may also be expressed by a uniform background color, character color, font, or the like so as to be distinguishable from other character strings.

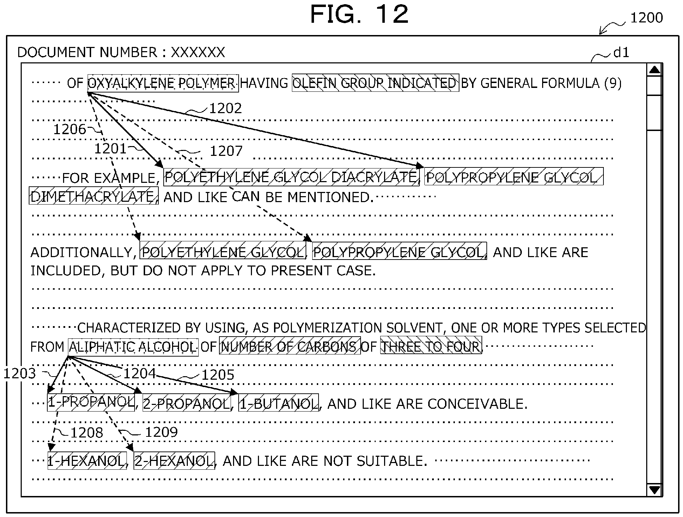

Note that a display example of association between the hypernym and the hyponym in the document d will be described later with reference to FIG. 12. The destination at which the document d is displayed is, for example, the client device 202.

In addition, when displaying the document d, the output control unit 707 may display a hyponym that is not associated with a hypernym in the document d among hyponyms relevant to the hypernym in a distinguishable manner. This may enable to distinguish a hyponym that is a hyponym relevant to the hypernym in the document d, but does not satisfy the search application condition.

In addition, the output control unit 707 may output information indicating the hyponym found in the search in association with the extracted hypernym in the document d. Examples of output ways by the output control unit 707 include storing in a storage device such as the memory 302 or the disk 304, transmitting to another computer (such as the client device 202) by the communication I/F 305, and the like.

This enables to output information capable of specifying the hyponym relevant to the hypernym in the document d. For example, in another computer (such as the client device 202), the association between the hypernym and the hyponym in the document d that have been associated may be displayed in a specifiable manner even when not coupled to the document analysis device 201.

Note that the functional units of the document analysis device 201 described above may be implemented by a plurality of computers in the information processing system 200 (for example, the document analysis device 201 and the client device 202).

### (Analysis Result for Modification Relationship in Document d)

Next, an analysis result for the modification relationship in the document d will be described with reference to FIG. 8.

FIG. 8 is an explanatory diagram illustrating an example of a modification relationship analysis result for the document d. In FIG. 8, the document d1 in which a modification relationship has been analyzed is illustrated. However, in FIG. 8, a part of the document d1 is displayed as an excerpt. In the document d1, the portion surrounded by <...> and </...> indicates the extracted named-entity.

A tag indicating the type of the named-entity is denoted by <...>. For example, a generic name that is a hypernym is indicated by <general>. A compound name that is a hyponym relevant to the generic name is indicated by <chemname>. A substituent name is indicated by <radical>. A physical property name is indicated by <property>. A physical property value is indicated by <value>. A personal name is indicated by <PERSON>, a date expression is indicated by <DATE>, and a time expression is indicated by <TIME>.

Here, the modification relationship between a hypernym 801 and a modifier character string 802 has been analyzed. The hypernym 801 is the generic name "oxyalkylene polymer" of a compound. The modifier character string 802 is an attributive modifier clause that modifies the hypernym 801. The modifier character string 802 includes a named-entity whose type is "radical". In these circumstances, the specifying unit 703 specifies the modifier character string 802 that modifies the hypernym 801 from the document d1.

In addition, the modification relationship between a hypernym 803 and a modifier character string 804 has been analyzed. The hypernym 803 is the generic name "aliphatic alcohol" of a compound. The modifier character string 804 is a modifier phrase that modifies the hypernym 803. The modifier character string 804 includes a named-entity whose type is "property" and a named-entity whose type is "value". In these circumstances, the specifying unit 703 specifies the modifier character string 804 that modifies the hypernym 803 from the document d1.

### (Example of Generating Search Application Condition)

Next, an example of generating a search application condition for the knowledge graph KG will be described with reference to FIGs. 9A and 9B. Here, as illustrated in FIG. 8, a case is supposed in which the modification relationship between the hypernym 801 and the modifier character string 802 in the document d1 has been analyzed, and the modification relationship between the hypernym 803 and the modifier character string 804 in the document d1 has been analyzed.

FIG. 9A is an explanatory diagram (part 1) illustrating an example of generating a search application condition for the knowledge graph KG. In FIG. 9A, the hypernym 801 and the modifier character string 802 that modifies the hypernym 801 are illustrated. The modifier character string 802 includes a named-entity whose type is "radical". In these circumstances, the generation unit 704 specifies the type "radical" and the content "olefin group" of the named-entity included in the modifier character string 802.

Next, the generation unit 704 refers to the named-entity-knowledge graph correspondence table 220 to acquire the search application condition information 500-1 corresponding to the specified type "radical" of the named-entity. Then, the generation unit 704 refers to the acquired search application condition information 500-1 to generate a search application condition according to the specified content "olefin group" of the named-entity.

To describe in more detail, for example, the generation unit 704 generates a condition 901 that a node X (coupling destination node) to which another node (coupling source node) indicating the extracted hypernym "oxyalkylene polymer" is coupled via an edge indicating "superordinate-subordinate" is searched for. In addition, the generation unit 704 refers to the search application condition information 500-1 to generate a condition 902 that the node X to which another node indicating the specified content "olefin group" of the named-entity is coupled via an edge indicating "radical" is searched for. The content "olefin group" of the named-entity corresponds to the value in the radical tag.

Then, the generation unit 704 generates a search application condition 910 including the conditions 901 and 902. In this way, the search application condition 910 that the compound name that is a compound name (hyponym) relevant to the generic name "oxyalkylene polymer" that is a hypernym and that is a compound name of a compound having the substituent "olefin group" is searched for is generated.

FIG. 9B is an explanatory diagram (part 2) illustrating an example of generating a search application condition for the knowledge graph KG. In FIG. 9B, the hypernym 803 and the modifier character string 804 that modifies the hypernym 803 are illustrated. The modifier character string 804 includes a named-entity whose type is "property" and a named-entity whose type is "value". In these circumstances, the generation unit 704 specifies each of the type "property, value" and the content "the number of carbons, 3 to 4" of the named-entity included in the modifier character string 804.

Next, the generation unit 704 refers to the named-entity-knowledge graph correspondence table 220 to acquire the search application condition information 500-2 corresponding to the specified type "property, value" of the named-entity. Then, the generation unit 704 refers to the acquired search application condition information 500-2 to generate a search application condition according to the specified content "the number of carbons, 3 to 4" of the named-entity.

To describe in more detail, for example, the generation unit 704 generates a condition 903 that the node X (coupling destination node) to which another node (coupling source node) indicating the extracted hypernym "aliphatic alcohol" is coupled via an edge indicating "superordinate-subordinate" is searched for. In addition, the generation unit 704 refers to the search application condition information 500-2 to generate a condition 904 that the node X to which another node indicating a value falling within the range of the specified content "3 to 4" of the named-entity is coupled via an edge indicating "the number of carbons" is searched for. "The number of carbons" indicated by the edge corresponds to the value in the property tag. The content "3 to 4" of the named-entity corresponds to the value in the value tag.

Then, the generation unit 704 generates a search application condition 920 including the conditions 903 and 904. In this way, the search application condition 920 that the compound name that is a compound name (hyponym) relevant to the generic name "oxyalkylene polymer" that is a hypernym and that is a compound name of a compound of which the number of carbons is "3 to 4" is searched for is generated.

### (Example of Searching for Hyponym Relevant to Hypernym)

Next, an example of searching for a hyponym relevant to a hypernym will be described with reference to FIGs. 10A and 10B. Here, a case is supposed in which the knowledge graph KG is searched for a hyponym (compound name) relevant to a hypernym (generic name) using the search application conditions 910 and 920 illustrated in FIGs. 9A and 9B.

FIG. 10A is an explanatory diagram (part 1) illustrating an example of searching for a hyponym relevant to a hypernym. In FIG. 10A, the search unit 705 searches the knowledge graph KG for a node meeting the generated search application condition 910. Here, the nodes n1-2 and n1-3 are found in the search from the graph g1 in the knowledge graph KG.

The nodes n1-2 and n1-3 are the nodes X to which the node n1-1 (coupling source node) indicating the hypernym "oxyalkylene polymer" is coupled via the edges e1-1 and e1-2 indicating "superordinate-subordinate" and the node n1-6 indicating the "olefin group" is coupled via the edges e1-5 and e1-6 indicating "radical".

Then, the search unit 705 acquires the compound names "polyethylene glycol diacrylate, polypropylene glycol dimethacrylate" indicated by the nodes n1-2 and n1-3 found in the search, as hyponyms (compound names) relevant to the generic name "oxyalkylene polymer".

FIG. 10B is an explanatory diagram (part 2) illustrating an example of searching for a hyponym relevant to a hypernym. In FIG. 10B, the search unit 705 searches the knowledge graph KG for a node meeting the generated search application condition 920. Here, the nodes n2-2, n2-3, and n2-4 are found in the search from the graph g2 in the knowledge graph KG.

The nodes n2-2, n2-3, and n2-4 are the nodes X to which the node n2-1 (coupling source node) indicating the hypernym "aliphatic alcohol" is coupled via the edges e2-1, e2-2, and e2-3 indicating "superordinate-subordinate" and the nodes n2-6, n2-7, and n2-8 indicating "3 or 4" are coupled via the edges e2-5, e2-6, and e2-7 indicating "the number of carbons".

Then, the search unit 705 acquires the compound names "1-propanol, 2-propanol, 1-butanol" indicated by the nodes n2-2, n2-3, and n2-4 found in the search, as hyponyms (compound names) relevant to the generic name "aliphatic alcohol".

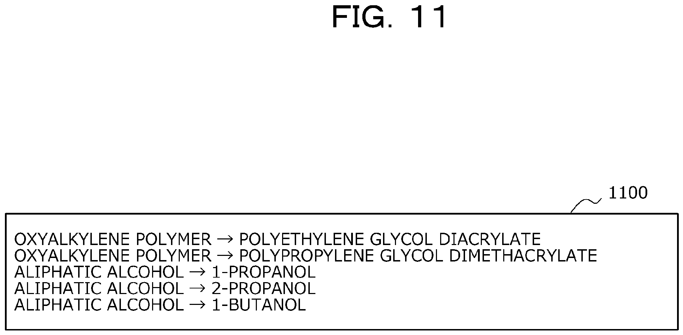

Here, a specific example of a search result will be described with reference to FIG. 11. Here, a case is supposed in which the knowledge graph KG is searched for a hyponym (compound name) relevant to a hypernym (generic name) using the search application conditions 910 and 920.

FIG. 11 is an explanatory diagram illustrating a specific example of a search result. In FIG. 11, a search result 1100 is information indicating the hyponyms (compound names) found in the search from the knowledge graph KG in association with the hypernyms (generic names) extracted from the document d1.

In the search result 1100, the compound names "polyethylene glycol diacrylate" and "polypropylene glycol dimethacrylate" are indicated in association with the generic name "oxyalkylene polymer". In addition, in the search result 1100, the compound names "1-propanol", "2-propanol", and "1-butanol" are indicated in association with the generic name "aliphatic alcohol".

### (Display Example of Association between Hypernym and Hyponym in Document d)

Next, a display example of association between the hypernyms and the hyponyms in the document d will be described with reference to FIG. 12. Here, the association between the hypernyms and the hyponyms displayed on the client device 202 will be taken as an example and described based on the search result 1100 illustrated in FIG. 11.

FIG. 12 is an explanatory diagram illustrating a display example of association between the hypernyms and the hyponyms in the document d. In FIG. 12, a reading comprehension support screen 1200 is an example of an operation screen displaying the document d1. On the reading comprehension support screen 1200, the named-entities extracted from the document d1 are displayed in different background colors (displayed in highlight) for each type.

In addition, on the reading comprehension support screen 1200, the generic names (hypernyms) and the compound names (hyponyms) in the document d1 that have been associated are coupled by solid arrows 1201 to 1205. For example, the generic name "oxyalkylene polymer" and the compound name "polyethylene glycol diacrylate" are coupled by the solid arrow 1201. In addition, the generic name "aliphatic alcohol" and the compound name "1-propanol" are coupled by the solid arrow 1203.

In addition, on the reading comprehension support screen 1200, the compound names (hyponyms) that are not associated with the generic names among the hyponyms relevant to the generic names (hypernyms) in the document d1 are coupled to the generic names by dotted arrow 1206 to 1209. However, the dotted arrows 1206 to 1209 may not be displayed.

According to the reading comprehension support screen 1200, when reading the document d1, the user may be allowed to easily grasp the difference in the type of the named-entity by the difference in the background color. Note that the document analysis device 201 may display information capable of specifying which background color corresponds to which type of the named-entity.

In addition, according to the reading comprehension support screen 1200, the user may be allowed to easily grasp appropriate association between the generic names (hypernyms) and the compound names (hyponyms) in the document d1 by the solid arrows 1201 to 1205. For example, the solid arrow 1201 may allow the user to understand that the oxyalkylene polymer and the polyethylene glycol diacrylate in the document d1 are in a relationship of a hypernym and a hyponym. In addition, the solid arrow 1202 may allow the user to understand that the oxyalkylene polymer and the polypropylene glycol dimethacrylate in the document d1 are in a relationship of a hypernym and a hyponym.

In addition, the solid arrow 1203 may allow the user to understand that the aliphatic alcohol and 1-propanol in the document d1 are in a relationship of a hypernym and a hyponym. The solid arrow 1204 may allow the user to understand that the aliphatic alcohol and 2-propanol in the document d1 are in a relationship of a hypernym and a hyponym. The solid arrow 1205 may allow the user to understand that the aliphatic alcohol and 1-butanol in the document d1 are in a relationship of a hypernym and a hyponym.

In addition, according to the reading comprehension support screen 1200, the user may be allowed to easily grasp the relationship between the generic names (hypernyms) and the compound names (hyponyms) that have association when the modifiers in the document d1 are not considered, by the dotted arrows 1206 to 1209. For example, the dotted arrow 1206 may allow the user to understand that the polyethylene glycol is a hyponym of the oxyalkylene polymer, but forms inappropriate association when the modifier is considered.

In this manner, according to the reading comprehension support screen 1200, it may be enabled to help interpreting the content of the document d1 by making it easy to grasp the superordinate-subordinate relationships of the compounds and the similar compounds. The reading comprehension support screen 1200 may be displayed, for example, when an input of the document d1 is accepted from the client device 202, or may also be displayed in response to a display request from the client device 202.

Note that, for example, the document analysis device 201 may display the solid arrows 1201 to 1205 and the dotted arrows 1206 to 1209 when the mouse cursor is placed on the generic name (hypernym) in the document d1 by an operation input from the user. This may avoid the screen from being complicated because of many arrows indicating the relationship between the hypernym and the hyponym that are being displayed.

In addition, the document analysis device 201 may transmit the search result 1100 as illustrated in FIG. 11 to another computer (such as the client device 202), for example. This may allow the another computer to display, when displaying the document d1, appropriate association between the hypernym and the hyponym, based on the search result 1100 without accessing the document analysis device 201.

### (Reading Comprehension Support Processing Procedure of Document Analysis Device 201)

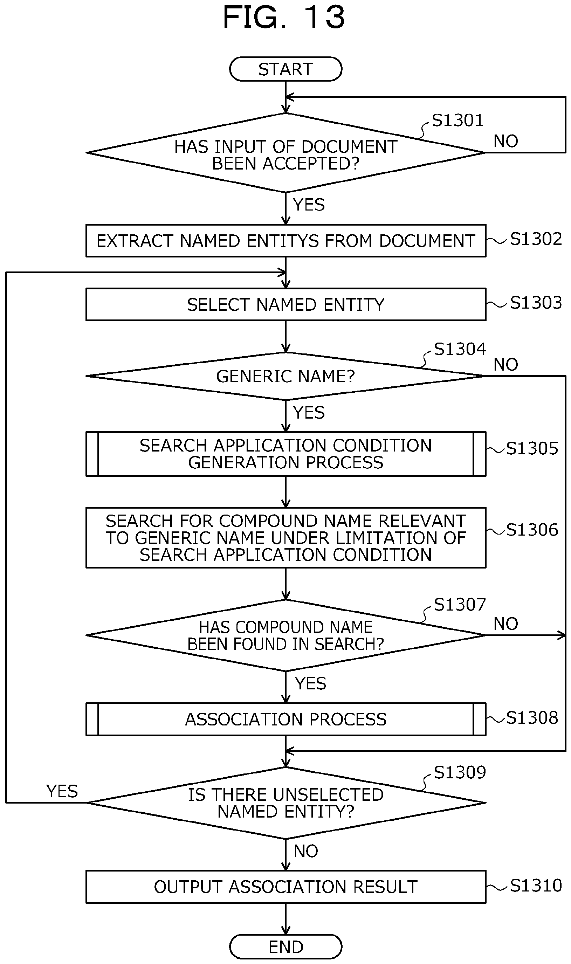

Next, a reading comprehension support processing procedure of the document analysis device 201 according to the first embodiment will be described with reference to FIG. 13.

FIG. 13 is a flowchart illustrating an example of a reading comprehension support processing procedure of the document analysis device 201 according to the first embodiment. In the flowchart in FIG. 13, first, the document analysis device 201 determines whether or not an input of the document d has been accepted (step S1301). Here, the document analysis device 201 waits for an input of the document d to be accepted (step S1301: No).

When an input of the document d has been accepted (step S1301: Yes), the document analysis device 201 extracts named-entities including hypernyms and hyponyms from the document d (step S1302). Next, the document analysis device 201 selects an unselected named-entity that has not been selected among the extracted named-entities (step S1303).

Then, the document analysis device 201 determines whether or not the type of the selected named-entity is the generic name of a compound (step S1304). Here, when the generic name is not concerned (step S1304: No), the document analysis device 201 proceeds to step S1309. On the other hand, when the generic name is concerned (step S1304: Yes), the document analysis device 201 executes a search application condition generation process (step S1305).

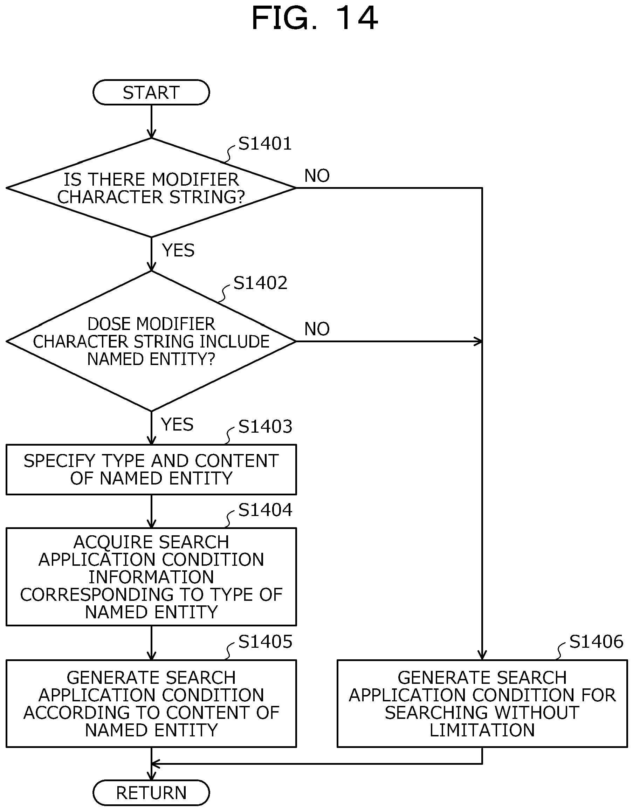

The search application condition generation process is a process of generating a search application condition to be applied when the knowledge graph KG is searched for a compound name (hyponym) relevant to the generic name (named-entity) selected in step S1303. A specific processing procedure of the search application condition generation process will be described later with reference to FIG. 14.

Next, the document analysis device 201 searches the knowledge graph KG for a compound name (hyponym) relevant to the selected generic name (named-entity) under the limitation of the generated search application condition (step S1306). Then, the document analysis device 201 determines whether or not a compound name has been found in the search (step S1307).

Here, when a compound name has not been found in the search (step S1307: No), the document analysis device 201 proceeds to step S1309. On the other hand, when a compound name has been found in the search (step S1307: Yes), the document analysis device 201 executes an association process (step S1308).

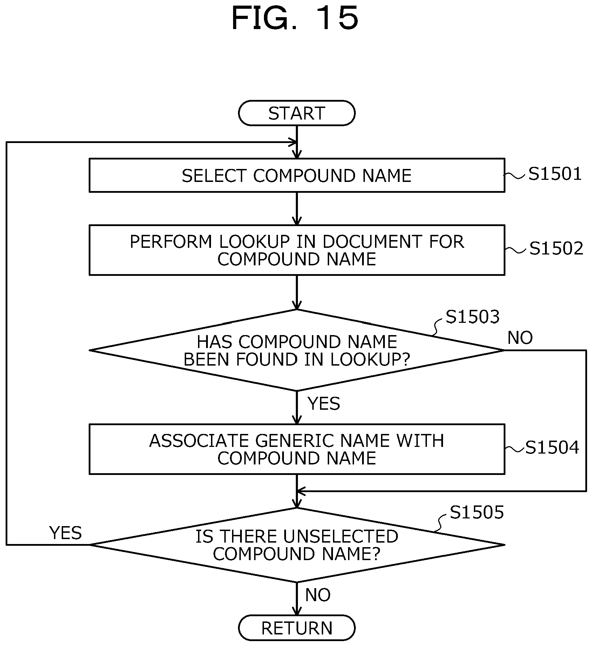

The association process is a process of associating the generic name (hypernym) selected in step S1303 with the compound name (hyponym) found in the search. A specific processing procedure of the association process will be described later with reference to FIG. 15.

Next, the document analysis device 201 determines whether or not there is an unselected named-entity that has not been selected among the extracted named-entities (step S1309). Here, when there is an unselected named-entity (step S1309: Yes), the document analysis device 201 returns to step S1303.

On the other hand, when there is no unselected named-entity (step S1309: No), the document analysis device 201 outputs an association result (step S1310) and ends the process sequence according to this flowchart. The association result may be, for example, the search result 1100 as illustrated in FIG. 11, or may also be the reading comprehension support screen 1200 as illustrated in FIG. 12.

This may allow the document analysis device 201 to indicate appropriate association between the generic name (hypernym) and the compound name (hyponym) in the document d.

Next, a specific processing procedure of the search application condition generation process in step S1305 illustrated in FIG. 13 will be described with reference to FIG. 14.

FIG. 14 is a flowchart illustrating an example of a specific processing procedure of the search application condition generation process. In the flowchart in FIG. 14, first, the document analysis device 201 determines whether or not there is a modifier character string that modifies the selected generic name (named-entity), from the results of syntax parsing and the like for the document d (step S1401). The modifier character string is, for example, a modifier phrase or an attributive modifier clause.

Here, when there is no modifier character string (step S1401: No), the document analysis device 201 proceeds to step S1406. On the other hand, when there is a modifier character string (step S1401: Yes), the document analysis device 201 determines whether or not the modifier character string includes a named-entity (step S1402).

Here, when a named-entity is included (step S1402: Yes), the document analysis device 201 specifies the type and content of the named-entity included in the modifier character string (step S1403). Next, the document analysis device 201 refers to the named-entity-knowledge graph correspondence table 220 to acquire the search application condition information corresponding to the specified type of the named-entity (step S1404).

Then, the document analysis device 201 refers to the acquired search application condition information to generate a search application condition according to the specified content of the named-entity (step S1405) and returns to the step in which the search application condition generation process has been called.

In addition, in step S1402, when no named-entity is included (step S1402: No), a search application condition for searching the knowledge graph KG for a compound name (hyponym) relevant to the generic name (hypernym) without limitation is generated (step S1406), and the process returns to the step in which the search application condition generation process has been called.

This may allow the document analysis device 201 to generate a condition capable of searching for an appropriate compound name (hyponym) relevant to the generic name (hypernym) in consideration of the character string that modifies the generic name (hypernym) in the document d, even when the generic name (hypernym) of a compound is limited in its properties, physical properties, and the like.

Next, a specific processing procedure of the association process in step S1308 illustrated in FIG. 13 will be described with reference to FIG. 15.

FIG. 15 is a flowchart illustrating an example of a specific processing procedure of the association process. In the flowchart in FIG. 15, first, the document analysis device 201 selects an unselected compound name that has not been selected among the compound names (hyponyms) found in the search in step S1306 (step S1501).

Next, the document analysis device 201 performs a lookup in the document d for the selected compound name (step S1502). Then, the document analysis device 201 determines whether or not the compound name has been found in the lookup (step S1503). Here, when the compound name has not been found in the lookup (step S1503: No), the document analysis device 201 proceeds to step S1505.

On the other hand, when the compound name has been found in the lookup (step S1503: Yes), the document analysis device 201 associates the selected generic name (hypernym) in the document d with the compound name (hyponym) found in the lookup in the document d (step S1504). Then, the document analysis device 201 determines whether or not there is an unselected compound name that has not been selected among the compound names (hyponyms) found in the search (step S1505).

Here, when there is an unselected compound name (step S1505: Yes), the document analysis device 201 returns to step S1501. On the other hand, when there is no unselected compound name (step S1505: No), the document analysis device 201 returns to the step in which the association process has been called.

This may allow the document analysis device 201 to appropriately associate the generic name (hypernym) and the compound name (hyponym) in the document d in consideration of the character string that modifies the generic name (hypernym) of a compound.

As described above, according to the document analysis device 201 according to the first embodiment, the named-entity including the hypernym can be extracted from the document d, and the modifier character string that modifies the extracted hypernym can be specified from the document d. Then, according to the document analysis device 201, the search application condition for the knowledge graph KG can be generated based on the type and content of the named-entity included in the specified modifier character string, the knowledge graph KG can be searched for a hyponym relevant to the extracted hypernym in accordance with the generated search application condition, and the extracted hypernym can be associated with the hyponym found in the search. The knowledge graph KG is, for example, a knowledge base obtained by forming a directed graph with knowledge regarding compounds as nodes and relationships between nodes as edges.

This may enable to appropriately associate the generic name (hypernym) and the compound name (hyponym) in consideration of the character string that modifies the generic name (hypernym) even when the generic name (hypernym) of a compound is limited in its properties, physical properties, and the like.

In addition, according to the document analysis device 201, a lookup can be performed in the document d for the hyponym found in the search, and the hypernym in the document d can be associated with the hyponym found in the lookup in the document d.

This may enable to appropriately associate the generic name (hypernym) and the compound name (hyponym) in the document d even when the generic name (hypernym) of a compound is limited in its properties, physical properties, and the like in the document d.

In addition, according to the document analysis device 201, the search application condition can be generated based on the type and content of the named-entity included in the specified modifier character string with reference to the named-entity-knowledge graph correspondence table 220.

This may enable to generate the search application condition to be applied when the knowledge graph KG is searched for a compound name (hyponym) in consideration of a modifier phrase or an attributive modifier clause for the generic name (hypernym) of a compound.

In addition, according to the document analysis device 201, when displaying the document d, the document d can be displayed such that association between the hypernym and the hyponym that have been associated in the document d is specifiable.

This may allow the user to easily grasp appropriate association between the generic name (hypernym) and the compound name (hyponym) in the document d.

In addition, according to the document analysis device 201, the hyponym found in the search can be output in association with the hypernym in the document d. Specifically, for example, the document analysis device 201 transmits the search result 1100 as illustrated in FIG. 11 to another computer (such as the client device 202).

This may allow the another computer to display, when displaying the document d, appropriate association between the hypernym and the hyponym without accessing the document analysis device 201.

From the above, according to the document analysis device 201 according to the first embodiment, even when the properties, physical properties, and the like of the generic name (hypernym) of a compound are limited, reading comprehension may be supported by appropriately associating the generic name (hypernym) and the compound name (hyponym), and the user may be assisted in interpreting the content.

### (Second Embodiment)

Next, a document analysis device 201 according to a second embodiment will be described. In the second embodiment, a case where a hypernym and a hyponym in different documents d are associated will be described. Note that illustration and description of parts similar to those in the first embodiment will be omitted.

### (Specific Examples of Different Documents d)

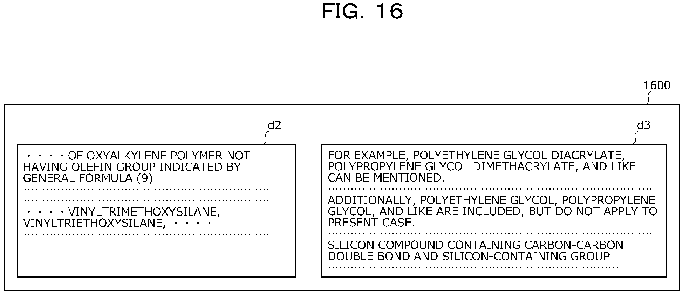

First, a specific example of different documents d to be input to the document analysis device 201 will be described with reference to FIG. 16.

FIG. 16 is an explanatory diagram illustrating a specific example of different documents d. In FIG. 16, an input document 1600 is an example of different documents d to be input to the document analysis device 201 and includes a document d2 and a document d3. The documents d2 and d3 are document data obtained by digitizing a patent, a thesis, or the like in the chemical field.

In each of the documents d2 and d3, a generic name (such as oxyalkylene polymer) of a compound, a compound name (such as polyethylene glycol diacrylate), and the like are described. However, in FIG. 16, parts of the documents d2 and d3 are displayed as excerpts.

### (Functional Configuration Example of Document Analysis Device 201)

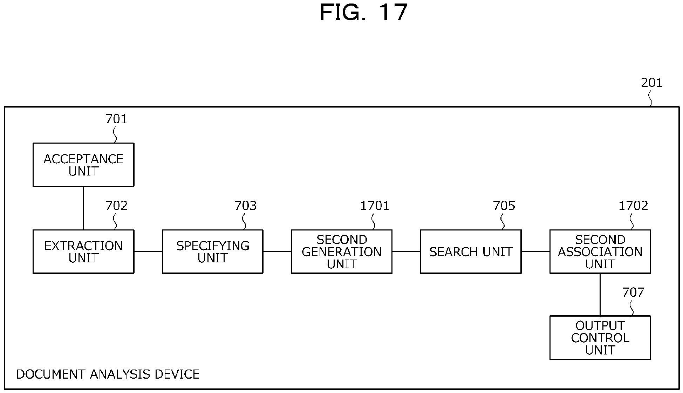

Next, a functional configuration example of the document analysis device 201 according to the second embodiment will be described with reference to FIG. 17. However, among functional units of the document analysis device 201 according to the second embodiment, the same functional units as the functional units of the document analysis device 201 according to the first embodiment will be given the same reference signs, and a detailed description thereof will be omitted.

FIG. 17 is a block diagram illustrating a functional configuration example of the document analysis device 201 according to the second embodiment. In FIG. 17, the document analysis device 201 includes an acceptance unit 701, an extraction unit 702, a specifying unit 703, a search unit 705, an output control unit 707, a second generation unit 1701, and a second association unit 1702. The acceptance unit 701 to the specifying unit 703, the search unit 705, the output control unit 707, the second generation unit 1701, and the second association unit 1702 have functions serving as a control unit, and specifically, those functions are implemented by causing a CPU 301 to execute a program stored in a storage device such as a memory 302, a disk 304, or a portable recording medium 307 or by a communication I/F 305 illustrated in FIG. 3, for example. A processing result of each functional unit is stored, for example, in a storage device such as the memory 302 or the disk 304.

The acceptance unit 701 accepts inputs of different documents d. Specifically, for example, the acceptance unit 701 accepts inputs of the documents d2 and d3 included in the input document 1600 by receiving the input document 1600 illustrated in FIG. 16 from a client device 202 (see FIG. 2).

The extraction unit 702 extracts the named-entity including a hypernym from the document d. Specifically, for example, the extraction unit 702 extracts a named-entity of a predefined type from each of the documents d2 and d3.

The specifying unit 703 specifies a modifier character string that modifies the extracted hypernym from the document d. Specifically, for example, the specifying unit 703 performs syntax parsing, dependency parsing, and the like on each of the documents d2 and d3 and specifies a modifier character string that modifies the hypernym from each of the documents d2 and d3, based on the result of the parsing.

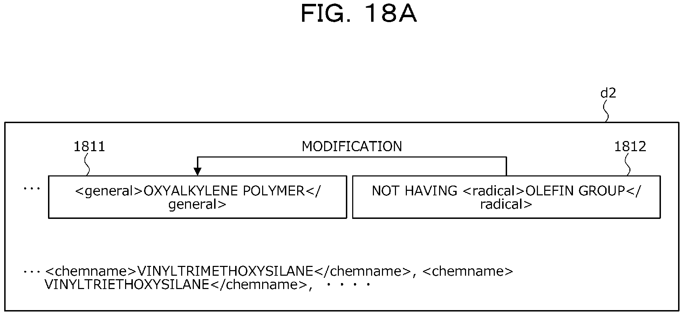

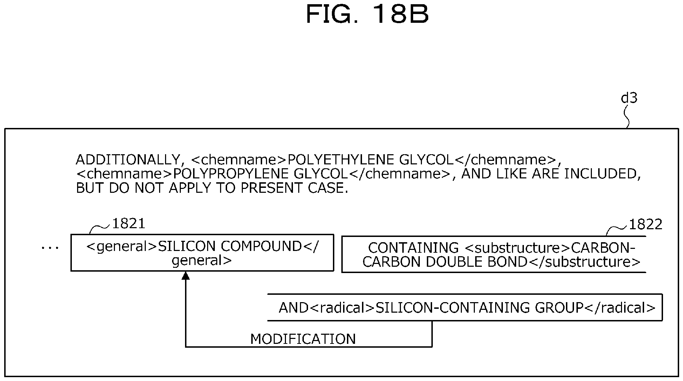

Note that the analysis result for the modification relationship in each of the documents d2 and d3 will be described later with reference to FIGs. 18A and 18B.

The second generation unit 1701 generates the search application condition for the knowledge graph KG. Specifically, for example, the second generation unit 1701 generates the search application conditions individually for each of the documents d2 and d3, based on the type and content of the named-entity included in the specified modifier character string.

To describe in more detail, for example, when a modifier character string that modifies the extracted generic name (hypernym) is specified for each of the documents d2 and d3, the second generation unit 1701 determines whether or not the specified modifier character string includes a named-entity. Here, when a named-entity is included in the modifier character string, the second generation unit 1701 specifies the type and content of the included named-entity.

Next, the second generation unit 1701 refers to a named-entity-knowledge graph correspondence table 220 (see FIG. 5) to acquire the search application condition information corresponding to the specified type of the named-entity. Then, the second generation unit 1701 refers to the acquired search application condition information to generate a search application condition according to the specified content of the named-entity.

In addition, when a plurality of named-entities is included in the modifier character string and the plurality of named-entities involves an alternative conjunction, the second generation unit 1701 generates the search application conditions for each of the plurality of named-entities. Then, the second generation unit 1701 sets an OR condition in the search application conditions generated for each of the plurality of named-entities. Examples of the alternative conjunction include "or", "nor", and the like. The OR condition is a condition that a hyponym (node) satisfying at least one of a plurality of search application conditions is searched for.

In addition, when a plurality of named-entities is included in the modifier character string and the plurality of named-entities involves a linking conjunction, the second generation unit 1701 generates the search application conditions for each of the plurality of named-entities. Then, the second generation unit 1701 sets an AND condition in the search application conditions generated for each of the plurality of named-entities. Examples of the linking conjunction include "and", "as well as", and the like. The AND condition is a condition that a hyponym (node) satisfying all the plurality of search application conditions is searched for.

In addition, when a named-entity involving a negative word is included in the modifier character string, the second generation unit 1701 sets a NOT condition in the search application condition for the named-entity. Examples of the negative word include "not". The NOT condition is a condition that a hyponym (node) satisfying the search application condition is excluded from the search objects.

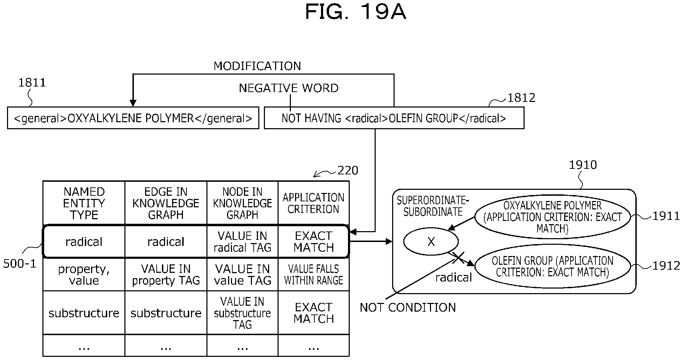

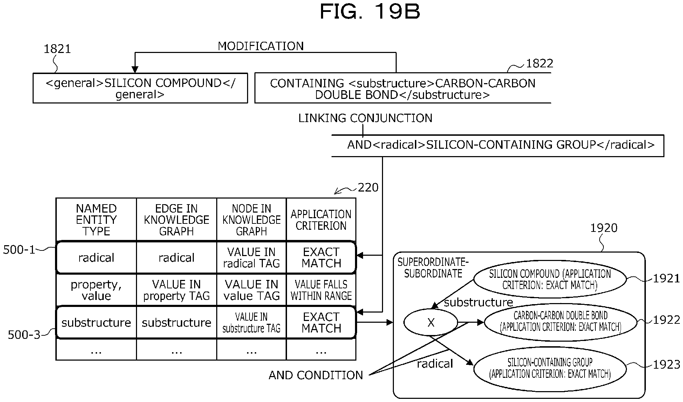

Note that an example of generating the search application conditions when the modifier character string includes a plurality of named-entities involving an alternative conjunction and a named-entity involving a negative word will be described later with reference to FIGs. 19A and 19B.

The search unit 705 searches the knowledge graph KG for a hyponym relevant to the extracted hypernym in accordance with the generated search application condition. Specifically, for example, the search unit 705 searches the knowledge graph KG for a node meeting the generated search application condition, for each of the documents d2 and d3. Then, the search unit 705 acquires the hyponym indicated by the node found in the search as a hyponym (compound name) relevant to the extracted hypernym (generic name), for each of the documents d2 and d3.

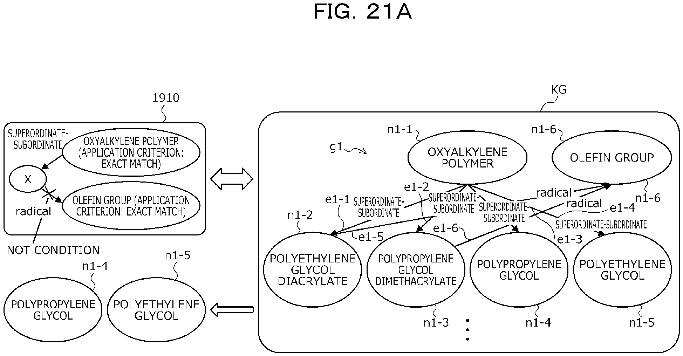

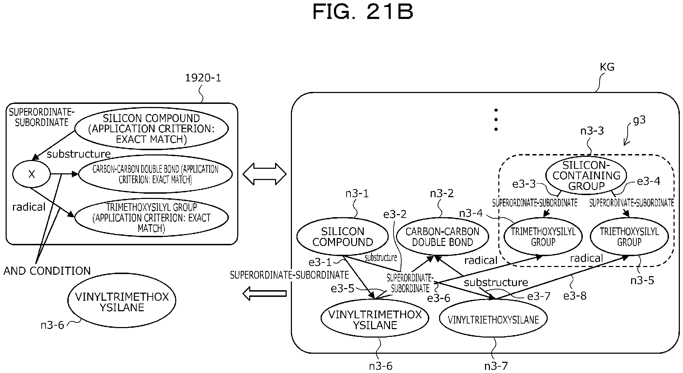

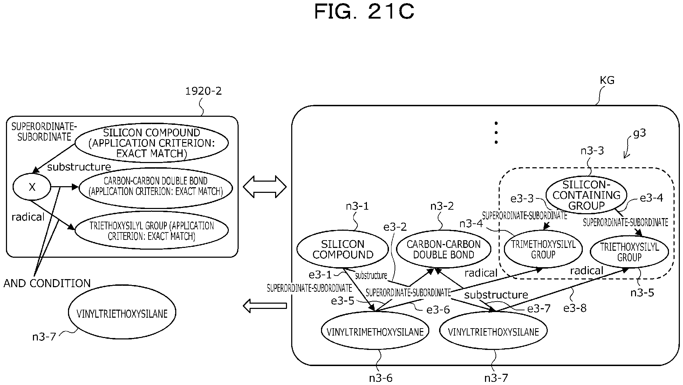

Note that examples of searching for a hyponym (compound name) relevant to a hypernym (generic name) will be described later with reference to FIGs. 21A, 21B, and 21C.

Here, there is a case where the named-entity included in the modifier character string is a hypernym. For example, there is a case where a substituent name included in a modifier character string that modifies the generic name of a compound is an abstract name. In this case, when the compound name (particular compound name) is related with the specific name instead of the abstract name of the substituent in the knowledge graph KG, the node meeting the search application condition will not be found in the search.

Therefore, the search unit 705 may search the knowledge graph KG for the named-entity included in the modifier character string. Then, when there is a hyponym of the named-entity found in the search in the knowledge graph KG, the second generation unit 1701 may change the search application condition generated for the named-entity, based on the hyponym of the named-entity.

Specifically, for example, the second generation unit 1701 changes the search application condition by replacing the named-entity (the abstract name of the substituent) included in the search application condition with the hyponym (the specific name of the substituent) of the included named-entity. That is, when the named-entity such as the substituent included in the modification expression is described as a hypernym (abstract name), the knowledge graph KG is searched after the hypernym is turned into the hyponym (specific name).

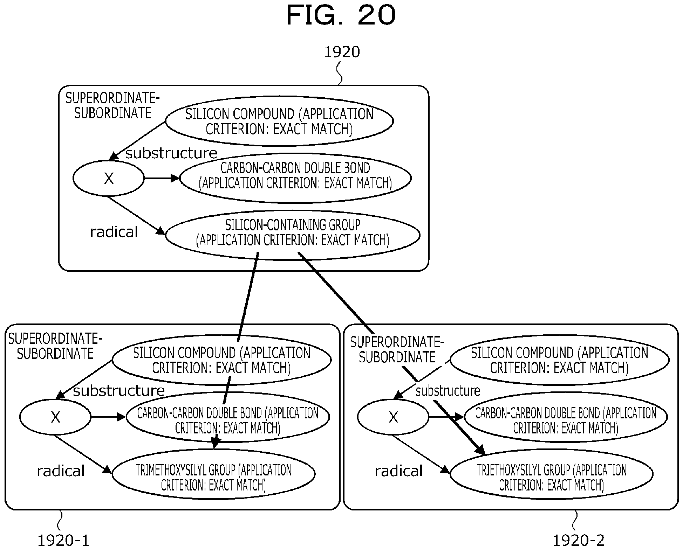

Note that an example of changing the search application condition will be described later with reference to FIG. 20.

The second association unit 1702 associates the extracted hypernym with the hyponym found in the search. Specifically, for example, for the document d2, the second association unit 1702 performs a lookup in another document d3 different from the document d2 for the hyponym (compound name) found in the search. Then, the second association unit 1702 may associate the extracted hypernym (generic name) in the document d2 with the hyponym (compound name) found in the lookup in the another document d3.

Similarly, for the document d3, the second association unit 1702 performs a lookup in another document d2 different from the document d3 for the hyponym (compound name) found in the search. Then, the second association unit 1702 may associate the extracted hypernym (generic name) in the document d3 with the hyponym (compound name) found in the lookup in the another document d2.

When displaying the different documents d, the output control unit 707 displays the documents d such that association between the hypernym and the hyponym in each of the documents d that have been associated is specifiable. Specifically, for example, when displaying the document d2 and the another document d3, the output control unit 707 displays the document d2 and the another document d3 such that association between the hypernym (generic name) in the document d2 and the hyponym (compound name) in the another document d3 that have been associated is specifiable.

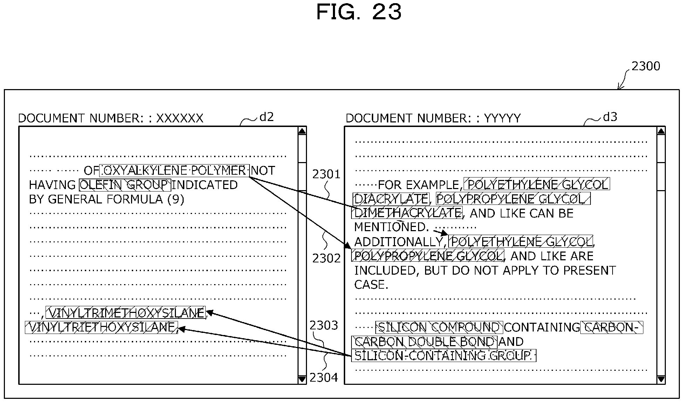

Note that a display example of association between the hypernym and the hyponym in different documents d will be described later with reference to FIG. 23.

### (Analysis Result for Modification Relationship in Each of Documents d2 and d3)

Next, an analysis result for the modification relationship in each of the documents d2 and d3 will be described with reference to FIGs. 18A and 18B.

FIG. 18A is an explanatory diagram illustrating an example of a modification relationship analysis result for the document d2. In FIG. 18A, the document d2 in which a modification relationship has been analyzed is illustrated. However, in FIG. 18A, a part of the document d2 is displayed as an excerpt. In the document d2, the portion surrounded by <...> and </...> indicates the extracted named-entity.

Here, the modification relationship between a hypernym 1811 and a modifier character string 1812 has been analyzed. The hypernym 1811 is the generic name "oxyalkylene polymer" of a compound. The modifier character string 1812 is an attributive modifier clause that modifies the hypernym 1811. The modifier character string 1812 includes a named-entity whose type is "radical". In these circumstances, the specifying unit 703 specifies the modifier character string 1812 that modifies the hypernym 1811 from the document d2.

FIG. 18B is an explanatory diagram illustrating an example of a modification relationship analysis result for the document d3. In FIG. 18B, the document d3 in which a modification relationship has been analyzed is illustrated. However, in FIG. 18B, a part of the document d3 is displayed as an excerpt. In the document d3, the portion surrounded by <...> and </...> indicates the extracted named-entity.

Here, the modification relationship between a hypernym 1821 and a modifier character string 1822 has been analyzed. The hypernym 1821 is the generic name "silicon compound" of a compound. The modifier character string 1822 is an attributive modifier clause that modifies the hypernym 1821. The modifier character string 1822 includes a named-entity whose type is "substructure" and a named-entity whose type is "radical". In these circumstances, the specifying unit 703 specifies the modifier character string 1822 that modifies the hypernym 1821 from the document d3.

### (Example of Generating Search Application Condition)

Next, an example of generating a search application condition for the knowledge graph KG will be described with reference to FIGs. 19A and 19B. Here, as illustrated in FIGs. 18A and 18B, a case is supposed in which the modification relationship between the hypernym 1811 and the modifier character string 1812 in the document d2 has been analyzed, and the modification relationship between the hypernym 1821 and the modifier character string 1822 in the document d3 has been analyzed.

FIG. 19A is an explanatory diagram (part 3) illustrating an example of generating a search application condition for the knowledge graph KG. In FIG. 19A, the hypernym 1811 and the modifier character string 1812 that modifies the hypernym 1811 are illustrated. The modifier character string 1812 includes a named-entity whose type is "radical" and involves a negative word of "not".

In these circumstances, the second generation unit 1701 determines that the named-entity involving the negative word "not" is included in the modifier character string 1812. In addition, the second generation unit 1701 specifies the type "radical" and the content "olefin group" of the named-entity included in the modifier character string 1812.

Next, the second generation unit 1701 refers to the named-entity-knowledge graph correspondence table 220 to acquire search application condition information 500-1 corresponding to the specified type "radical" of the named-entity. Then, the second generation unit 1701 refers to the acquired search application condition information 500-1 to generate a search application condition according to the specified content "olefin group" of the named-entity. In addition, the second generation unit 1701 sets the NOT condition in the generated search application condition.

To describe in more detail, for example, the second generation unit 1701 generates a condition 1911 that a node X (coupling destination node) to which another node (coupling source node) indicating the extracted hypernym "oxyalkylene polymer" is coupled via an edge indicating "superordinate-subordinate" is searched for. In addition, the second generation unit 1701 refers to the search application condition information 500-1 to generate a condition 1912 that the node X to which another node indicating the specified content "olefin group" of the named-entity is coupled via an edge indicating "radical" is searched for. Then, the second generation unit 1701 sets the NOT condition in the generated condition 1912.

Then, the second generation unit 1701 generates a search application condition 1910 including the conditions 1911 and 1912. In this way, the search application condition 1910 that the compound name that is a compound name (hyponym) relevant to the generic name "oxyalkylene polymer" that is a hypernym and that is a compound name of a compound that does not include the substituent "olefin group" is searched for is generated. Note that the × mark in the search application condition 1910 indicates the NOT condition.

FIG. 19B is an explanatory diagram (part 4) illustrating an example of generating a search application condition for the knowledge graph KG. In FIG. 19B, the hypernym 1821 and the modifier character string 1822 that modifies the hypernym 1821 are illustrated. The modifier character string 1822 includes a named-entity whose type is "substructure" and a named-entity whose type is "radical" involving the linking conjunction.

In these circumstances, the second generation unit 1701 generates the search application conditions for each of the named-entity "substructure" and the named-entity "radical". First, the second generation unit 1701 specifies the type "substructure" and the content "carbon-carbon double bond" of the named-entity included in the modifier character string 1822.

Next, the second generation unit 1701 refers to the named-entity-knowledge graph correspondence table 220 to acquire search application condition information 500-3 corresponding to the specified type "substructure" of the named-entity. Then, the second generation unit 1701 refers to the acquired search application condition information 500-3 to generate a search application condition according to the specified content "carbon-carbon double bond" of the named-entity.

In addition, the second generation unit 1701 specifies the type "radical" and the content "silicon-containing group" of the named-entity included in the modifier character string 1822. Next, the second generation unit 1701 refers to the named-entity-knowledge graph correspondence table 220 to acquire the search application condition information 500-1 corresponding to the specified type "radical" of the named-entity. Then, the second generation unit 1701 refers to the acquired search application condition information 500-1 to generate a search application condition according to the specified content "silicon-containing group" of the named-entity. In addition, the second generation unit 1701 sets the AND condition in a plurality of the generated search application conditions.

To describe in more detail, for example, the second generation unit 1701 generates a condition 1921 that the node X (coupling destination node) to which another node (coupling source node) indicating the extracted hypernym "silicon compound" is coupled via an edge indicating "superordinate-subordinate" is searched for. In addition, the second generation unit 1701 refers to the search application condition information 500-3 to generate a condition 1922 that the node X to which another node indicating the specified content "carbon-carbon double bond" of the named-entity is coupled via an edge indicating "substructure" is searched for.

In addition, the second generation unit 1701 refers to the search application condition information 500-1 to generate a condition 1923 that the node X to which another node indicating the specified content "silicon-containing group" of the named-entity is coupled via an edge indicating "radical" is searched for. Next, the second generation unit 1701 sets the AND condition in the generated conditions 1922 and 1923.

Then, the second generation unit 1701 generates a search application condition 1920 including the condition 1921 and the conditions 1922 and 1923 in which the AND condition is set. In this way, the search application condition 1920 that the compound name that is a compound name (hyponym) relevant to the generic name "silicon compound" that is a hypernym and that is a compound name of a compound including the substructure "carbon-carbon double bond" and the substituent "silicon-containing group" is searched for is generated.

### (Example of Changing Search Application Condition)

Next, an example of changing the search application condition will be described with reference to FIG. 20.

FIG. 20 is an explanatory diagram illustrating an example of changing the search application condition. In FIG. 20, the search application condition 1920 is illustrated. The search application condition 1920 includes "silicon-containing group" that is an abstract name of a substituent. The search unit 705 searches the knowledge graph KG for the named-entity "silicon-containing group" included in the search application condition 1920, that is, the named-entity "silicon-containing group" included in the modifier character string 1822.

Then, when the named-entity "silicon-containing group" is found in the search, the second generation unit 1701 determines whether or not the named-entity "silicon-containing group" found in the search in the knowledge graph KG has a hyponym. Here, when the named-entity "silicon-containing group" has a hyponym, the second generation unit 1701 changes the search application condition 1920, based on the hyponym of the named-entity.

Here, it is assumed that there are "trimethoxysilyl group" and "triethoxysilyl group" as hyponyms of the named-entity "silicon-containing group" in the knowledge graph KG. In these circumstances, the second generation unit 1701 changes the search application condition 1920 by replacing the named-entity "silicon-containing group" included in the search application condition 1920 with the hyponym "trimethoxysilyl group" of the named-entity.

In this way, a search application condition 1920-1 that the compound name that is a compound name (hyponym) relevant to the generic name "silicon compound" that is a hypernym and that is a compound name of a compound including the substructure "carbon-carbon double bond" and the substituent "trimethoxysilyl group" is searched for is generated.

In addition, the second generation unit 1701 changes the search application condition 1920 to a search application condition 1920-2 by replacing the named-entity "silicon-containing group" included in the search application condition 1920 with the hyponym "triethoxysilyl group" of the named-entity.

In this way, the search application condition 1920-2 that the compound name that is a compound name (hyponym) relevant to the generic name "silicon compound" that is a hypernym and that is a compound name of a compound including the substructure "carbon-carbon double bond" and the substituent "triethoxysilyl group" is searched for is generated.

### (Example of Searching for Hyponym Relevant to Hypernym)

Examples of searching for a hyponym (compound name) relevant to the hypernym (generic name) will be described with reference to FIGs. 21A, 21B, and 21C. Here, a case is supposed in which the knowledge graph KG is searched for a hyponym relevant to a hypernym using the search application conditions 1910, 1920-1, and 1920-2 illustrated in FIGs. 19A and 20.

FIG. 21A is an explanatory diagram (part 3) illustrating an example of searching for a hyponym relevant to a hypernym. In FIG. 21A, the search unit 705 searches the knowledge graph KG for a node meeting the generated search application condition 1910. Here, nodes n1-4 and n1-5 are found in the search from a graph g1 in the knowledge graph KG.

The nodes n1-4 and n1-5 are the nodes X to which a node n1-1 (coupling source node) indicating the hypernym "oxyalkylene polymer" is coupled via edges e1-3 and e1-4 indicating "superordinate-subordinate" and a node n1-6 indicating the "olefin group" is not coupled.

Then, the search unit 705 acquires the compound names "polypropylene glycol, polyethylene glycol" indicated by the nodes n1-4 and n1-5 found in the search, as hyponyms (compound names) relevant to the generic name "oxyalkylene polymer".

FIG. 21B is an explanatory diagram (part 4) illustrating an example of searching for a hyponym relevant to a hypernym. In FIG. 21B, the search unit 705 searches the knowledge graph KG for a node meeting the generated search application condition 1920-1. Here, a node n3-6 is found in the search from a graph g3 in the knowledge graph KG. The graph g3 includes nodes n3-1 to n3-7 and edges e3-1 to e3-8.

The node n3-6 is the node X to which the node n3-1 (coupling source node) indicating the hypernym "silicon compound" is coupled via the edge e3-1 indicating "superordinate-subordinate", the node n3-2 indicating "carbon-carbon double bond" is coupled via the edge e3-5 indicating "substructure", and the node n3-4 indicating "trimethoxysilyl group" is coupled via the edge e3-6 indicating "radical".

Then, the search unit 705 acquires the compound name "vinyltrimethoxysilane" indicated by the node n3-4 found in the search, as a hyponym (compound name) relevant to the generic name "silicon compound".

FIG. 21C is an explanatory diagram (part 5) illustrating an example of searching for a hyponym relevant to a hypernym. In FIG. 21C, the search unit 705 searches the knowledge graph KG for a node meeting the generated search application condition 1920-2. Here, the nodes n3-7 is found in the search from the graph g3 in the knowledge graph KG.

The node n3-7 is the node X to which the node n3-1 (coupling source node) indicating the hypernym "silicon compound" is coupled via the edge e3-2 indicating "superordinate-subordinate", the node n3-2 indicating "carbon-carbon double bond" is coupled via the edge e3-7 indicating "substructure", and the node n3-5 indicating "triethoxysilyl group" is coupled via the edge e3-8 indicating "radical".

Then, the search unit 705 acquires the compound name "vinyltriethoxysilane" indicated by the node n3-7 found in the search, as a hyponym (compound name) relevant to the generic name "silicon compound".

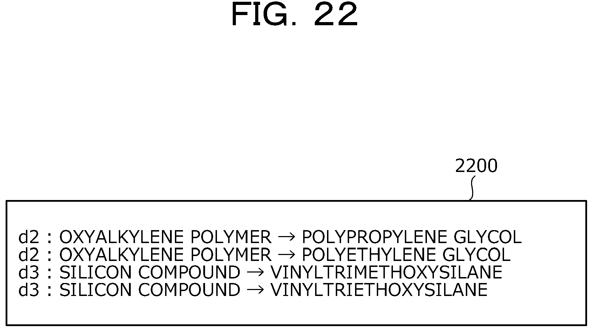

Here, a specific example of a search result will be described with reference to FIG. 22. Here, a case is supposed in which the knowledge graph KG is searched for a hyponym relevant to a hypernym using the search application conditions 1910, 1920-1, and 1920-2.

FIG. 22 is an explanatory diagram illustrating a specific example of a search result. In FIG. 22, a search result 2200 is information indicating the hyponyms (compound names) found in the search from the knowledge graph KG in association with the hypernyms (generic names) extracted from the documents d2 and d3.

In the search result 2200, the compound names "polypropylene glycol" and "polyethylene glycol" are indicated in association with the generic name "oxyalkylene polymer" extracted from the documents d2. In addition, in the search result 2200, the compound names "vinyltrimethoxysilane" and "vinyltriethoxysilane" are indicated in association with the generic name "silicon compound" extracted from the document d3.

### (Display Example of Association between Hypernym and Hyponym in Different Documents d)

Next, a display example of association between the hypernyms and the hyponyms in different documents d will be described with reference to FIG. 23. Here, the association between the hypernyms and the hyponyms displayed on the client device 202 will be taken as an example and described based on the search result 2200 illustrated in FIG. 22.

FIG. 23 is an explanatory diagram illustrating a display example of association between hypernyms and hyponyms in different documents d. In FIG. 23, a reading comprehension support screen 2300 is an example of an operation screen displaying the documents d2 and d3. On the reading comprehension support screen 2300, the named-entities extracted from each of the documents d2 and d3 are displayed in different background colors (displayed in highlight) for each type.

In addition, on the reading comprehension support screen 2300, the generic names (hypernyms) in the document d2 and the compound names (hyponyms) in the document d3 that have been associated are coupled by solid arrows 2301 and 2302. Specifically, the generic name "oxyalkylene polymer" and the compound name "polyethylene glycol" are coupled by the solid arrow 2301. The generic name "oxyalkylene polymer" and the compound name "polypropylene glycol" are coupled by the solid arrow 2302.

In addition, on the reading comprehension support screen 2300, the generic names (hypernyms) in the document d3 and the compound names (hyponyms) in the document d2 that have been associated are coupled by solid arrows 2303 and 2304. Specifically, the generic name "silicon compound" and the compound name "vinyltrimethoxysilane" are coupled by the solid arrow 2303. The generic name "silicon compound" and the compound name "vinyltriethoxysilane" are coupled by the solid arrow 2304.

According to the reading comprehension support screen 2300, when reading the documents d2 and d3, the user may be allowed to easily grasp the difference in the type of the named-entity by the difference in the background color.

In addition, according to the reading comprehension support screen 2300, the user may be allowed to easily grasp appropriate association between the generic name (hypernym) in the document d2 and the compound names (hyponyms) in the document d3 by the solid arrows 2301 and 2302. For example, the solid arrow 2301 may allow the user to understand that the oxyalkylene polymer in the document d2 and the polyethylene glycol in the document d3 are in a relationship of a hypernym and a hyponym. In addition, the solid arrow 2303 may allow the user to understand that the silicon compound in the document d3 and the vinyltrimethoxysilane in the document d2 are in a relationship of a hypernym and a hyponym.

In this manner, according to the reading comprehension support screen 2300, by making it easy to grasp the superordinate-subordinate relationships of the compounds and the similar compounds, it may be enabled to help interpreting the content when, for example, performing literature research or the like by comparing the documents d2 and d3.

Note that, for example, the document analysis device 201 may display the solid arrows 2301 and 2302 when the mouse cursor is placed on the generic name (hypernym) in the document d2 by an operation input from the user. In addition, for example, the document analysis device 201 may display the solid arrows 2303 and 2304 when the mouse cursor is placed on the generic name (hypernym) in the document d3. This may avoid the screen from being complicated because of many arrows indicating the relationship between the hypernym and the hyponym that are being displayed.

In addition, the document analysis device 201 may transmit the search result 2200 as illustrated in FIG. 22 to another computer (such as the client device 202), for example. This may allow the another computer to display, when displaying the different documents d2 and d3, appropriate association between the hypernym and the hyponym in the documents d2 and d3, based on the search result 2200 without accessing the document analysis device 201.

### (Reading Comprehension Support Processing Procedure of Document Analysis Device 201)

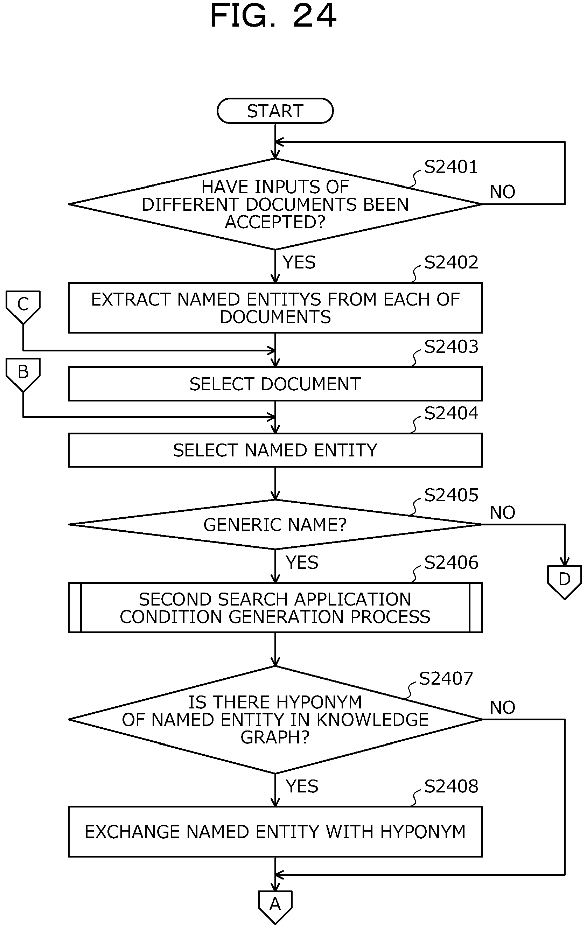

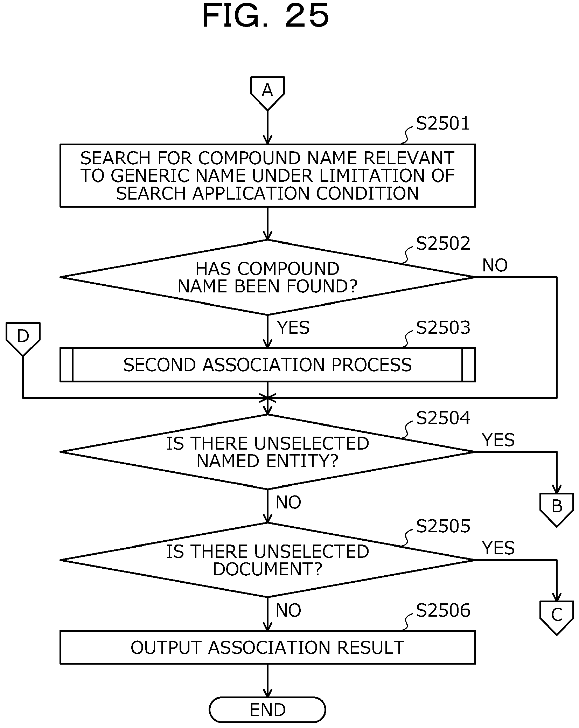

Next, a reading comprehension support processing procedure of the document analysis device 201 according to the second embodiment will be described with reference to FIGs. 24 and 25.

FIGs. 24 and 25 are flowcharts illustrating an example of a reading comprehension support processing procedure of the document analysis device 201 according to the second embodiment. In the flowchart in FIG. 24, first, the document analysis device 201 determines whether or not inputs of different documents d have been accepted (step S2401). The different documents d are, for example, the documents d2 and d3 illustrated in FIG. 16.

Here, the document analysis device 201 waits for inputs of different documents d to be accepted (step S2401: No). When inputs of different documents d have been accepted (step S2401: Yes), the document analysis device 201 extracts named-entities including hypernyms and hyponyms from each of the documents d (step S2402).

Then, the document analysis device 201 selects an unselected document d that has not been selected among the different documents d that have been input (step S2403). Next, the document analysis device 201 selects an unselected named-entity that has not been selected among the named-entities extracted from the selected document d (step S2404).

Then, the document analysis device 201 determines whether or not the type of the selected named-entity is the generic name of a compound (step S2405). Here, when the generic name is not concerned (step S2405: No), the document analysis device 201 proceeds to step S2504 illustrated in FIG. 25. On the other hand, when the generic name is concerned (step S2405: Yes), the document analysis device 201 executes a second search application condition generation process (step S2406).

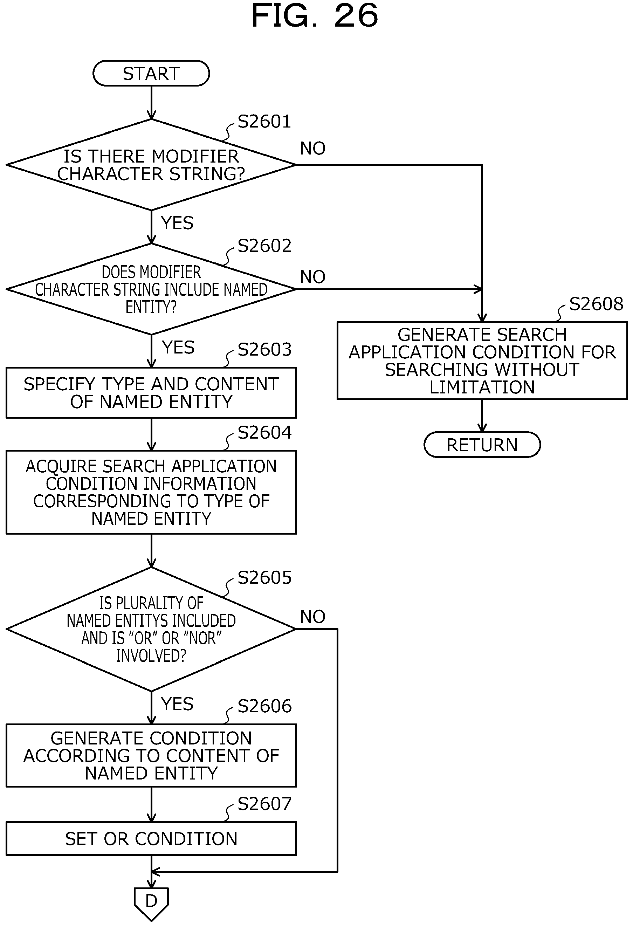

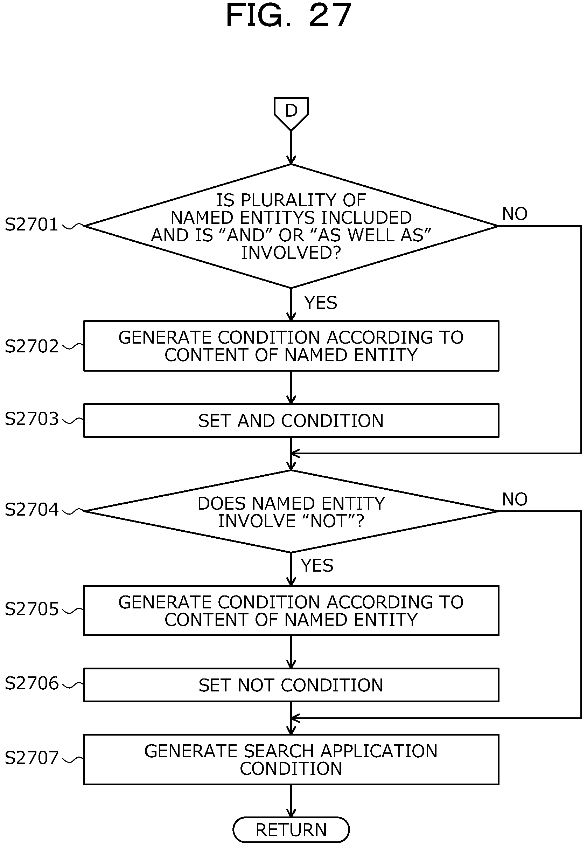

The second search application condition generation process is a process of generating a search application condition to be applied when the knowledge graph KG is searched for a compound name (hyponym) relevant to the generic name (named-entity) selected in step S2404. A specific processing procedure of the second search application condition generation process will be described later with reference to FIGs. 26 and 27.

Next, the document analysis device 201 determines whether or not there is a hyponym of the named-entity included in the search application condition in the knowledge graph KG (step S2407). Here, when there is no hyponym (step S2407: No), the document analysis device 201 proceeds to step S2501 illustrated in FIG. 25.

On the other hand, when there is a hyponym (step S2407: Yes), the document analysis device 201 exchanges the named-entity included in the search application condition with the hyponym of the named-entity (step S2408) and proceeds to step S2501 illustrated in FIG. 25.

In the flowchart in FIG. 25, first, the document analysis device 201 searches the knowledge graph KG for a compound name (hyponym) relevant to the selected generic name (named-entity) under the limitation of the generated search application condition (step S2501). Then, the document analysis device 201 determines whether or not a compound name has been found in the search (step S2502).

Here, when a compound name has not been found in the search (step S2502: No), the document analysis device 201 proceeds to step S2504. On the other hand, when a compound name has been found in the search (step S2502: Yes), the document analysis device 201 executes a second association process (step S2503).

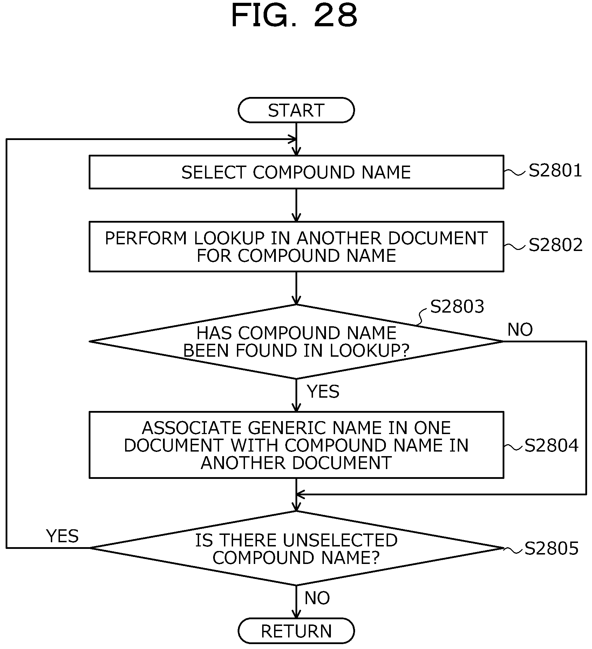

The second association process is a process of associating the generic name (hypernym) selected in step S2404 with the compound name (hyponym) found in the search. A specific processing procedure of the second association process will be described later with reference to FIG. 28.

Next, the document analysis device 201 determines whether or not there is an unselected named-entity that has not been selected among the named-entities extracted from the selected document d (step S2504). Here, when there is an unselected named-entity (step S2504: Yes), the document analysis device 201 returns to step S2404 illustrated in FIG. 24.

On the other hand, when there is no unselected named-entity (step S2504: No), the document analysis device 201 determines whether or not there is an unselected document d that has not been selected among the different documents d (step S2505). Here, when there is an unselected document d (step S2505: Yes), the document analysis device 201 returns to step S2403 illustrated in FIG. 24.

On the other hand, when there is no unselected document d (step S2505: No), the document analysis device 201 outputs an association result (step S2506) and ends the process sequence according to this flowchart. The association result may be, for example, the search result 2200 as illustrated in FIG. 22, or may also be the reading comprehension support screen 2300 as illustrated in FIG. 23.

This may allow the document analysis device 201 to indicate appropriate association between the generic name (hypernym) and the compound name (hyponym) in different documents d.

Next, a specific processing procedure of the second search application condition generation process in step S2406 illustrated in FIG. 24 will be described with reference to FIGs. 26 and 27.

FIGs. 26 and 27 are flowcharts illustrating an example of a specific processing procedure of the second search application condition generation process. In the flowchart in FIG. 26, first, the document analysis device 201 determines whether or not there is a modifier character string that modifies the selected generic name (named-entity), from the results of syntax parsing and the like for the selected document d (step S2601).

Here, when there is no modifier character string (step S2601: No), the document analysis device 201 proceeds to step S2608. On the other hand, when there is a modifier character string (step S2601: Yes), the document analysis device 201 determines whether or not the modifier character string includes a named-entity (step S2602).

Here, when a named-entity is included (step S2602: Yes), the document analysis device 201 specifies the type and content of the named-entity included in the modifier character string (step S2603). Then, the document analysis device 201 refers to the named-entity-knowledge graph correspondence table 220 to acquire the search application condition information corresponding to the specified type of the named-entity (step S2604).

Next, the document analysis device 201 determines whether or not a plurality of named-entities is included in the modifier character string and the plurality of named-entities involves "or" or "nor" (step S2605). Here, when the plurality of named-entities does not involve "or" or "nor" (step S2605: No), the document analysis device 201 proceeds to step S2701 illustrated in FIG. 27.

On the other hand, when the plurality of named-entities involves "or" or "nor" (step S2605: Yes), the document analysis device 201 refers to the acquired search application condition information to generate a condition according to the specified content of the named-entity, for each of the plurality of named-entities (step S2606). Then, the document analysis device 201 sets the OR condition in the conditions generated for each of the plurality of named-entities (step S2607) and proceeds to step S2701 illustrated in FIG. 27.

In addition, in step S2602, when no named-entity is included (step S2602: No), a search application condition for searching the knowledge graph KG for a compound name (hyponym) relevant to the generic name (hypernym) without limitation is generated (step S2608), and the process returns to the step in which the second search application condition generation process has been called.

In the flowchart in FIG. 27, the document analysis device 201 determines whether or not a plurality of named-entities is included in the modifier character string and the plurality of named-entities involves "and" or "as well as" (step S2701). Here, when the plurality of named-entities does not involve "and" or "as well as" (step S2701: No), the document analysis device 201 proceeds to step S2704.

On the other hand, when the plurality of named-entities involves "and" or "as well as" (step S2701: Yes), the document analysis device 201 refers to the acquired search application condition information to generate a condition according to the specified content of the named-entity, for each of the plurality of named-entities (step S2702). Then, the document analysis device 201 sets the AND condition in the conditions generated for each of the plurality of named-entities (step S2703).

Next, the document analysis device 201 determines whether or not the modifier character string includes a named-entity involving a negative word (step S2704). Here, when a named-entity involving a negative word is not included (step S2704: No), the document analysis device 201 proceeds to step S2707.

On the other hand, when a named-entity involving a negative word is included (step S2704: Yes), the document analysis device 201 refers to the acquired search application condition information for the named-entity to generate a condition according to the specified content of the named-entity (step S2705). Then, the document analysis device 201 sets the NOT condition in the generated condition (step S2706).

Note that, when a named-entity that is not applicable to any of steps S2605, S2701, and S2704 is included in the modifier character string, the document analysis device 201 generates a condition according to the content of the named-entity also for the included named-entity.

Next, the document analysis device 201 generates a search application condition to be applied when the knowledge graph KG is searched for a compound name (hyponym) relevant to the generic name (named-entity), based on the conditions generated in step S2606 and the like, the OR condition and the like set in step S2607 and the like (step S2707) and returns to the step in which the second search application condition generation process has been called.

This may allow the document analysis device 201 to generate a condition capable of searching for an appropriate compound name (hyponym) relevant to the generic name (hypernym) in consideration of the character string that modifies the generic name (hypernym) in the document d, even when the generic name (hypernym) of a compound is limited in its properties, physical properties, and the like.

Next, a specific processing procedure of the second association process in step S2503 illustrated in FIG. 25 will be described with reference to FIG. 28.

FIG. 28 is a flowchart illustrating an example of a specific processing procedure of the second association process. In the flowchart in FIG. 28, first, the document analysis device 201 selects an unselected compound name that has not been selected among the compound names (hyponyms) found in the search in step S2501 (step S2801).

Next, the document analysis device 201 performs a lookup in another document d different from the selected document d for the selected compound name (step S2802). Then, the document analysis device 201 determines whether or not the compound name has been found in the lookup (step S2803). Here, when the compound name has not been found in the lookup (step S2803: No), the document analysis device 201 proceeds to step S2805.

On the other hand, when the compound name has been found in the lookup (step S2803: Yes), the document analysis device 201 associates the selected generic name (hypernym) in the selected document d with the compound name (hyponym) found in the lookup in the another document d (step S2804). Then, the document analysis device 201 determines whether or not there is an unselected compound name that has not been selected among the compound names (hyponyms) found in the search (step S2805).

Here, when there is an unselected compound name (step S2805: Yes), the document analysis device 201 returns to step S2801. On the other hand, when there is no unselected compound name (step S2805: No), the document analysis device 201 returns to the step in which the second association process has been called.

As described above, according to the document analysis device 201 according to the second embodiment, a hyponym relevant to the hypernym extracted from the document d can be found in the search in the knowledge graph KG, the hyponym found in the search can be found in a lookup in another document d, and the extracted hypernym in the document d can be associated with the hyponym found in the lookup in the another document d.

This may enable to appropriately associate the generic name (hypernym) and the compound name (hyponym) in different documents d even when the generic name (hypernym) of a compound is limited in its properties, physical properties, and the like.

In addition, according to the document analysis device 201, when a plurality of named-entities is included in the modifier character string and the plurality of named-entities involves an alternative conjunction, the OR condition can be set in the search application conditions generated for each of the plurality of named-entities.

This may enable to generate, when a modifier phrase or an attributive modifier clause that modifies the generic name (hypernym) includes a plurality of named-entities involving an alternative conjunction such as "or" or "nor", a condition that a compound name (hyponym) satisfying at least one of the search application conditions for each of the plurality of named-entities is searched for. Therefore, even when the generic name (hypernym) of a compound is limited in its properties, physical properties, and the like in an alternative manner, the generic name (hypernym) and the compound name (hyponym) may be appropriately associated.

In addition, according to the document analysis device 201, when a plurality of named-entities is included in the modifier character string and the plurality of named-entities involves a linking conjunction, the AND condition can be set in the search application conditions generated for each of the plurality of named-entities.

This may enable to generate, when a modifier phrase or an attributive modifier clause that modifies the generic name (hypernym) includes a plurality of named-entities involving a linking conjunction such as "and" or "as well as", a condition that a compound name (hyponym) satisfying all the search application conditions for each of the plurality of named-entities is searched for. Therefore, even when the generic name (hypernym) of a compound is subjected to a plurality of limitations in its properties, physical properties, and the like, the generic name (hypernym) and the compound name (hyponym) may be appropriately associated.

In addition, according to the document analysis device 201, when a named-entity involving a negative word is included in the modifier character string, the NOT condition can be set in the search application condition for the named-entity.

This may enable to generate, when a modifier phrase or an attributive modifier clause that modifies the generic name (hypernym) includes a named-entity involving a negative word such as "not", a condition that a compound name (hyponym) satisfying the search application condition for the included named-entity is excluded from the search objects. Therefore, even when the properties or physical properties of the generic name (hypernym) of a compound are limited with a negative expression, the generic name (hypernym) and the compound name (hyponym) may be appropriately associated.

In addition, according to the document analysis device 201, when the knowledge graph KG is searched for the named-entity included in the modifier character string and the knowledge graph KG includes a hyponym of the named-entity found in the search, the search application condition generated for the named-entity can be changed based on the hyponym of the named-entity. Then, according to the document analysis device 201, the knowledge graph KG can be searched for a hyponym relevant to the hypernym in accordance with the changed search application condition.

This enables to, when the named-entity such as the substituent included in the modifier character string is described as a hypernym (abstract name), the knowledge graph KG can be searched after turning the hypernym into the hyponym (specific name). Therefore, for example, even when the compound name (particular compound name) is related with the specific name instead of the abstract name of the substituent in the knowledge graph KG, the applicable node may be found in the search.

In addition, according to the document analysis device 201, when displaying the document d and another document d, the document d and the another document d can be displayed such that association between the hypernym in the document d and the hyponym in the another document d that have been associated is specifiable.

This may allow the user to easily grasp appropriate association between the generic name (hypernym) and the compound name (hyponym) in different documents d.

Note that the document analysis device 201 according to the first embodiment may have the same functions as the functions of the document analysis device 201 according to the second embodiment.

### (Third Embodiment)

Next, a document lookup device 2900 according to a third embodiment will be described. The document lookup device 2900 is a computer (information processing device) that performs a lookup in a document DB (not illustrated) for a document according to a lookup query. The document lookup device 2900 is included in, for example, the information processing system 200 (see FIG. 2).

For example, the document lookup device 2900 is a server, a PC, or the like. Specifically, for example, the document lookup device 2900 may be implemented by a document analysis device 201 or a client device 202 in an information processing system 200, or may also be implemented by another computer in the information processing system 200 (see FIG. 2).

The document DB stores a document. The document regarded as a lookup object is, for example, patent, thesis literature, or the like in the chemical field. The document DB may be included in the document lookup device 2900, or may also be included in another computer accessible by the document lookup device 2900. Note that illustration and description of parts similar to those in the first and second embodiments will be omitted.

### (Functional Configuration Example of Document Lookup Device 2900)

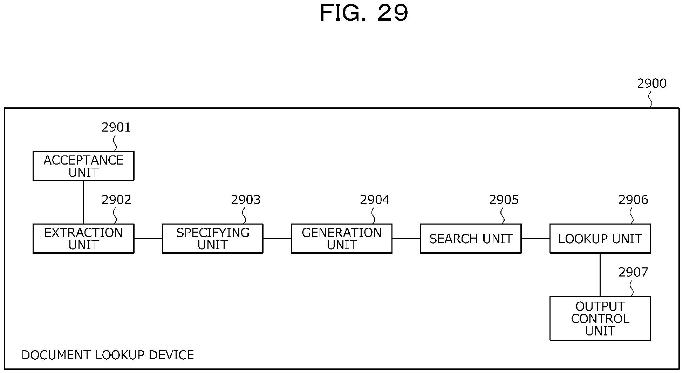

First, a functional configuration example of the document lookup device 2900 according to the third embodiment will be described with reference to FIG. 29.

FIG. 29 is a block diagram illustrating a functional configuration example of the document lookup device 2900 according to the third embodiment. In FIG. 29, the document lookup device 2900 includes an acceptance unit 2901, an extraction unit 2902, a specifying unit 2903, a generation unit 2904, a search unit 2905, a lookup unit 2906, and an output control unit 2907. The acceptance unit 2901 through the output control unit 2907 have functions to serve as a control unit, and specifically, for example, those functions are implemented by causing a CPU 301 to execute a program stored in a storage device such as a memory 302, a disk 304, or a portable recording medium 307 or by a communication I/F 305 as illustrated in FIG. 3. A processing result of each functional unit is stored, for example, in a storage device such as the memory 302 or the disk 304.

The acceptance unit 2901 accepts an input of a lookup query. The lookup query may be, for example, a character string such as a word or a sentence, or may also be a document d. Specifically, for example, by receiving the lookup query from the client device 202 (see FIG. 2), the acceptance unit 2901 accepts an input of the received lookup query.

The extraction unit 2902 extracts the named-entity including a hypernym from the lookup query. Specifically, for example, the extraction unit 2902 extracts a named-entity of a predefined type from the lookup query.

The specifying unit 2903 specifies a modifier character string that modifies the extracted hypernym from the lookup query. Specifically, for example, the specifying unit 2903 performs syntax parsing, dependency parsing, and the like on the lookup query and specifies a modifier character string that modifies the hypernym from the lookup query, based on the result of the parsing.

Note that the analysis result for the modification relationship in the lookup query is similar to the analysis results in the first and second embodiments, and thus illustration and description thereof will be omitted.

The generation unit 2904 generates the search application condition for the knowledge graph KG. Specifically, for example, the generation unit 2904 generates the search application condition, based on the type and content of the named-entity included in the specified modifier character string. To describe in more detail, for example, when a modifier character string that modifies the extracted hypernym is specified, the generation unit 2904 determines whether or not the specified modifier character string includes a named-entity.

Here, when a named-entity is included in the modifier character string, the generation unit 2904 specifies the type and content of the included named-entity. Next, the generation unit 2904 refers to a named-entity-knowledge graph correspondence table 220 (see FIG. 5) to acquire the search application condition information corresponding to the specified type of the named-entity. Then, the generation unit 2904 refers to the acquired search application condition information to generate a search application condition according to the specified content of the named-entity.

Note that an example of generating the search application condition is similar to the examples in the first and second embodiments, and thus illustration and description thereof will be omitted.

The search unit 2905 searches the knowledge graph KG for a hyponym relevant to the extracted hypernym in accordance with the generated search application condition. Specifically, for example, the search unit 2905 searches the knowledge graph KG for a node meeting the generated search application condition. Then, the search unit 2905 acquires the hyponym indicated by the node found in the search as a hyponym (compound name) relevant to the extracted hypernym (generic name).

Note that an example of searching for a hyponym (compound name) relevant to the hypernym (generic name) is similar to the examples in the first and second embodiments, and thus illustration and description thereof will be omitted. In addition, the knowledge graph KG may be included in the document lookup device 2900, or may also be included in another computer (such as the document analysis device 201) accessible by the document lookup device 2900.

The lookup unit 2906 sets the extracted hypernym and the hyponym found in the search, as lookup keywords for when performing a lookup for a document according to the lookup query. That is, the lookup unit 2906 associates the extracted hypernym (generic name) and the hyponym (compound name) found in the search and sets the associated hypernym (generic name) and hyponym (compound name) as lookup keywords.

In addition, the lookup unit 2906 may set a named-entity other than the hypernym among the extracted named-entities, as a lookup keyword. Examples of the named-entity other than the hypernym include a substituent, a substructure, a physical property, a usage, and the like.

For example, it is assumed that "an oxyalkylene polymer having an olefin group" is input as a lookup query. In these circumstances, the modification relationship is analyzed as illustrated in FIG. 8, and a search application condition 910 as illustrated in FIG. 9A is generated. Then, as illustrated in FIG. 10A, the compound names "polyethylene glycol diacrylate" and "polypropylene glycol dimethacrylate" are found in the search from the knowledge graph KG, as hyponyms (compound names) relevant to the generic name "oxyalkylene polymer", based on the search application condition 910. In these circumstances, the lookup unit 2906 sets, for example, "oxyalkylene polymer", "olefin group", "polyethylene glycol diacrylate", and "polypropylene glycol dimethacrylate" as lookup keywords. "Olefin group" is a named-entity (substituent) other than the hypernym.

The lookup unit 2906 performs a lookup for a document, based on the set lookup keywords. Specifically, for example, the lookup unit 2906 may set the AND condition for the keywords (words) included in the lookup keywords and perform a lookup in the document DB for a document including all the keywords included in the lookup keywords. In addition, the lookup unit 2906 may set the OR condition for the keywords included in the lookup keywords and perform a lookup in the document DB for a document including at least one of the keywords included in the lookup keywords.

The output control unit 2907 outputs a lookup result of the lookup that has been performed. The destination to which the lookup result is to be output is, for example, the client device 202 from which the lookup query has been input. Specifically, for example, the output control unit 2907 may emphasize and display the keywords when displaying the lookup result.

To describe in more detail, for example, when displaying, as a lookup result, a snippet of the document on which the lookup has been performed, the output control unit 2907 displays the keywords included in the snippet in a background color, a character color, a font, or the like different from those of other characters. The snippet has a description of the document and, for example, includes a title, a summary, a link, and the like of the document.

Note that the functional units of the document lookup device 2900 described above may be implemented by a plurality of computers in the information processing system 200 (for example, the document analysis device 201 and the client device 202).

### (Display Example of Lookup Result of Lookup Performed according to Lookup Query)

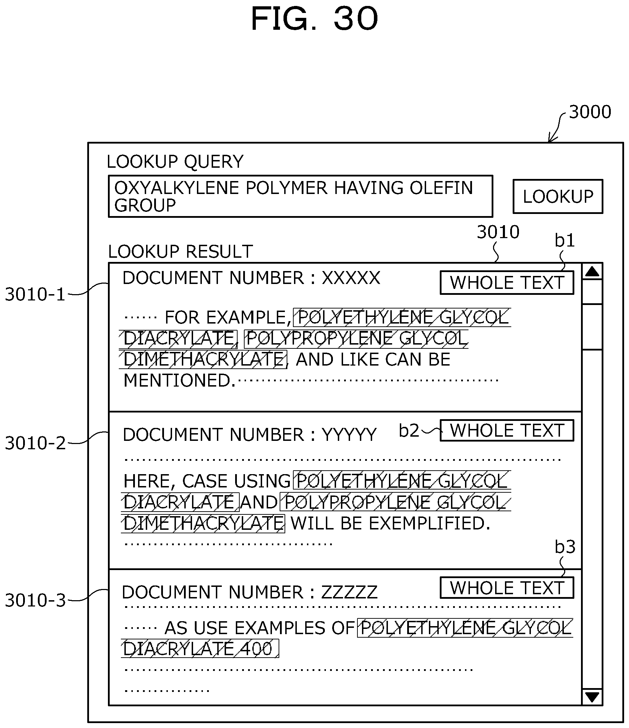

Here, a display example of a lookup result of a lookup performed according to the lookup query will be described with reference to FIG. 30.

FIG. 30 is an explanatory diagram illustrating a display example of a lookup result of a lookup performed according to a lookup query. In FIG. 30, a lookup result screen 3000 is an example of an operation screen that displays a lookup result 3010 of a lookup performed according to a lookup query, in a scrollable manner. Here, a case where "an oxyalkylene polymer having an olefin group" is input as a lookup query is supposed.

The lookup result 3010 includes, for example, snippet information 3010-1 to 3010-3. The snippet information 3010-1 to 3010-3 includes a document number and a summary of the documents found in the lookup according to the lookup query. According to the lookup result screen 3000, the user is allowed to perform a lookup for a document according to the lookup query.

In addition, on the lookup result screen 3000, the keywords included in the snippet information 3010-1 to 3010-3 are displayed in highlight. Here, "polyethylene glycol diacrylate" and "polypropylene glycol dimethacrylate" that coincide with the lookup query are displayed in highlight. Therefore, the user is allowed to easily locate a desired document.

Note that, when each of whole text buttons b1 to b3 is selected on the lookup result screen 3000 by an operation input from the user, the whole text of each document is displayed. In addition, on the lookup result screen 3000, a document may be designated as a lookup query.

### (Document Lookup Processing Procedure of Document Lookup Device 2900)

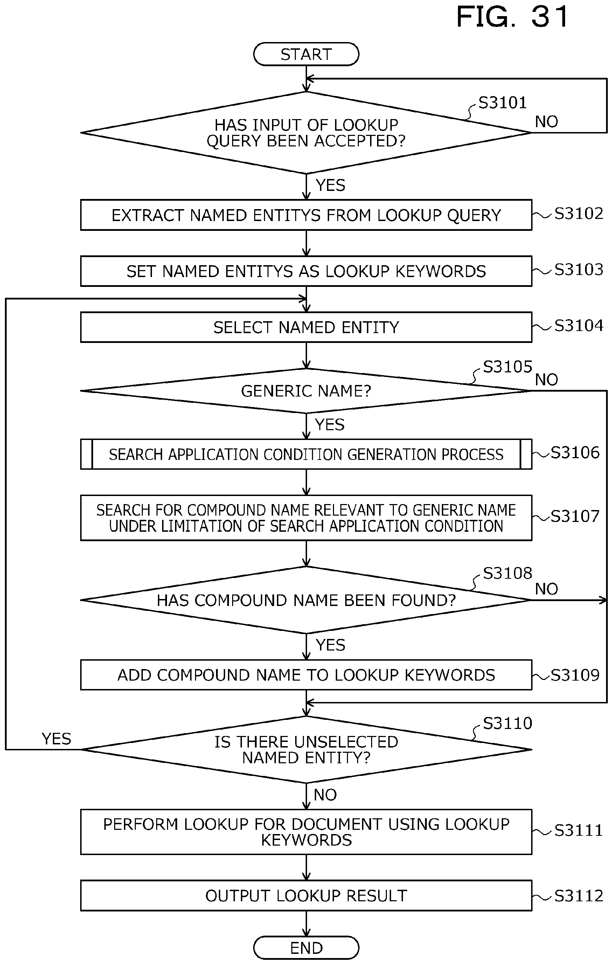

Next, a document lookup processing procedure of the document lookup device 2900 according to the third embodiment will be described with reference to FIG. 31.

FIG. 31 is a flowchart illustrating an example of the document lookup processing procedure of the document lookup device 2900 according to the third embodiment. In the flowchart in FIG. 31, first, the document lookup device 2900 determines whether or not an input of a lookup query has been accepted (step S3101). Here, the document lookup device 2900 waits for an input of a lookup query to be accepted (step S3101: No).

When an input of a lookup query has been accepted (step S3101: Yes), the document lookup device 2900 extracts named-entities including hypernyms and hyponyms from the lookup query (step S3102). Then, the document lookup device 2900 sets the extracted named-entities as lookup keywords (step S3103).

Next, the document lookup device 2900 selects an unselected named-entity that has not been selected among the extracted named-entities (step S3104). Then, the document lookup device 2900 determines whether or not the type of the selected named-entity is the generic name of a compound (step S3105).

Here, when the generic name is not concerned (step S3105: No), the document lookup device 2900 proceeds to step S3110. On the other hand, when the generic name is concerned (step S3105: Yes), the document lookup device 2900 executes a search application condition generation process (step S3106).

Note that a specific processing procedure of the search application condition generation process is similar to the processing procedure of the search application condition generation process illustrated in FIG. 14 or the second search application condition generation process illustrated in FIGs. 26 and 27, and thus, illustration and description thereof will be omitted.

Next, the document lookup device 2900 searches the knowledge graph KG for a compound name (hyponym) relevant to the selected generic name (named-entity) under the limitation of the generated search application condition (step S3107). Then, the document lookup device 2900 determines whether or not a compound name has been found in the search (step S3108).

Here, when a compound name has not been found in the search (step S3108: No), the document lookup device 2900 proceeds to step S3110. On the other hand, when a compound name has been found in the search (step S3108: Yes), the document lookup device 2900 adds the compound name found in the search to the lookup keywords (step S3109).

Next, the document lookup device 2900 determines whether or not there is an unselected named-entity that has not been selected among the extracted named-entities (step S3110). Here, when there is an unselected named-entity (step S3110: Yes), the document lookup device 2900 returns to step S3104.

On the other hand, when there is no unselected named-entity (step S3110: No), the document lookup device 2900 performs a lookup in the document DB for a document using the lookup keywords (step S3111). Then, the document lookup device 2900 outputs a lookup result (step S3112) and ends the process sequence according to this flowchart.

This may allow the document lookup device 2900 to derive appropriate association between the generic name (hypernym) and the compound name (hyponym) in consideration of the character string that modifies the generic name (hypernym) in the lookup query and to perform a lookup for a document.

As described above, according to the document lookup device 2900 according to the third embodiment, the named-entity including the hypernym can be extracted from the lookup query, and the modifier character string that modifies the extracted hypernym can be specified from the lookup query. Then, according to the document lookup device 2900, the search application condition for the knowledge graph KG can be generated based on the type and content of the named-entity included in the specified modifier character string, the knowledge graph KG can be searched for a hyponym in accordance with the generated search application condition, and the extracted hypernym and the hyponym found in the search can be set as lookup keywords for when performing a lookup for a document according to the lookup query.

This may enable to derive appropriate association between the generic name (hypernym) and the compound name (hyponym) in consideration of the character string that modifies the generic name (hypernym) in the lookup query, and to extend the lookup query, even when the generic name (hypernym) of a compound is limited in its properties, physical properties, and the like. Therefore, it becomes easy to perform a lookup for a document intended by the user in the lookup query, and the work load and work time taken by the user in literature research and the like may be reduced.

Note that the document analysis devices 201 according to the first and second embodiments may have the same functions as the functions of the document lookup device 2900 according to the third embodiment.

The information processing method (a document analysis method and a document lookup method) described in the present embodiments may be implemented by a computer such as a personal computer or a workstation executing a program prepared in advance. The present information processing program (a document analysis program and a document lookup program) is recorded on a computer-readable recording medium such as a hard disk, a flexible disk, a CD-ROM, a DVD, or a USB memory and is read from the recording medium to be executed by a computer. In addition, the present information processing program may be distributed via a network such as the Internet.

Furthermore, the information processing device 101 (the document analysis device 201 and the document lookup device 2900) described in the present embodiments can also be implemented by a special-purpose integrated circuit (IC) such as a standard cell or a structured application specific integrated circuit (ASIC) or a programmable logic device (PLD) such as a field-programmable gate array (FPGA).

### CITATION LIST

### PATENT DOCUMENT

Patent Document 1: Japanese Laid-open Patent Publication No. 2020-35172
Patent Document 2: Japanese National Publication of International Patent Application No. 2016-532942
Patent Document 3: Japanese Laid-open Patent Publication No. 2019-74843
Patent Document 4: Japanese Laid-open Patent Publication No. 2019-179470

### REFERENCE SIGNS LIST

101 Information processing device
110 Storage unit
120, 910, 920, 1910, 1920 Search application condition
200 Information processing system
201 Document analysis device
202 Client device
210 Network
220 Named-entity-knowledge graph correspondence table
300 Bus
301 CPU
302 Memory
303 Disk drive
304 Disk
305 Communication I/F
306 Portable recording medium I/F
307 Portable recording medium
701, 2901 Acceptance unit
702, 2902 Extraction unit
703, 2903 Specifying unit
704, 2904 Generation unit
705, 2905 Search unit
706 Association unit
707, 2907 Output control unit
1100, 2200 Search result
1200, 2300 Reading comprehension support screen
1600 Input document
1701 Second generation unit
1702 Second association unit
2900 Document lookup device
2906 Lookup unit
3000 Lookup result screen

## Claims

1. An information processing program for causing a computer to execute processing comprising:
extracting named-entities that include a hypernym from a document;
specifying a modifier character string that modifies the extracted hypernym from the document;
generating conditions to be applied when a knowledge graph is searched for a hyponym relevant to the extracted hypernym, based on a type and content of the named-entities included in the specified modifier character string;
searching the knowledge graph for the hyponym in accordance with the generated conditions; and
associating the extracted hypernym with the hyponym found in the search.

2. The information processing program according to claim 1, wherein
the associating includes:
performing a lookup in the document for the hyponym found in the search; and
associating the hypernym in the document with the hyponym found in the lookup in the document.

3. The information processing program according to claim 1, wherein
the associating includes:
performing a lookup in another document different from the document for the hyponym found in the search; and
associating the hypernym in the document with the hyponym found in the lookup in the another document.

4. The information processing program according to claim 1, wherein
the knowledge graph is information obtained by forming a directed graph with knowledge regarding compounds as nodes and relationships between the nodes as edges, and
the generating includes:
referring to a storage unit that stores information capable of specifying a search object node according to the type and the content of the named-entities included in a phrase or a clause that modifies generic names of the compounds; and generating the conditions, based on the type and the content of the named-entities included in the specified modifier character string.

5. The information processing program according to claim 1, wherein
the generating includes
when a plurality of the named-entities is included in the modifier character string and the plurality of the named-entities involves an alternative conjunction, setting an OR condition in the conditions generated for each of the plurality of the named-entities.

6. The information processing program according to claim 1, wherein
the generating includes
when a plurality of the named-entities is included in the modifier character string and the plurality of the named-entities involves a linking conjunction, setting an AND condition in the conditions generated for each of the plurality of the named-entities.

7. The information processing program according to claim 1, wherein
the generating includes
when the named-entities that involve a negative word are included in the modifier character string, setting a NOT condition in the conditions for the named-entities.

8. The information processing program according to claim 1, the processing further comprising:
searching the knowledge graph for the named-entities included in the modifier character string; and
changing the conditions generated for the named-entities, based on the hyponym of the named-entities when the knowledge graph includes the hyponym of the named-entities found in the search, wherein
the searching includes
searching the knowledge graph for the hyponym relevant to the hypernym in accordance with the changed conditions.

9. The information processing program according to claim 2, the processing further comprising, when displaying the document, displaying the document such that association between the hypernym and the hyponym that have been associated in the document is specifiable.

10. The information processing program according to claim 3, the processing further comprising, when displaying the document and the another document, displaying the document and the another document such that association between the hypernym in the document and the hyponym in the another document that have been associated is specifiable.

11. The information processing program according to claim 2 or 3, wherein
the associating includes
outputting the hyponym found in the search in association with the hypernym in the document.

12. An information processing program for causing a computer to execute processing comprising:
extracting named-entities that include a hypernym from a lookup query;
specifying a modifier character string that modifies the extracted hypernym from the lookup query;
generating conditions to be applied when a knowledge graph is searched for a hyponym relevant to the extracted hypernym, based on a type and content of the named-entities included in the specified modifier character string;
searching the knowledge graph for the hyponym in accordance with the generated conditions; and
setting the extracted hypernym and the hyponym found in the search as lookup keywords for when performing a lookup for a document according to the lookup query.

13. An information processing method implemented by a computer, the information processing method comprising:
extracting named-entities that include a hypernym from a document;
specifying a modifier character string that modifies the extracted hypernym from the document;
generating conditions to be applied when a knowledge graph is searched for a hyponym relevant to the extracted hypernym, based on a type and content of the named-entities included in the specified modifier character string;
searching the knowledge graph for the hyponym in accordance with the generated conditions; and
associating the extracted hypernym with the hyponym found in the search.

14. An information processing method implemented by a computer, the information processing method comprising:
extracting named-entities that include a hypernym from a lookup query;
specifying a modifier character string that modifies the extracted hypernym from the lookup query;
generating conditions to be applied when a knowledge graph is searched for a hyponym relevant to the extracted hypernym, based on a type and content of the named-entities included in the specified modifier character string;
searching the knowledge graph for the hyponym in accordance with the generated conditions; and
setting the extracted hypernym and the hyponym found in the search as lookup keywords for when performing a lookup for a document according to the lookup query.

15. An information processing apparatus comprising a control unit configured to perform processing including:
extracting named-entities that include a hypernym from a document;
specifying a modifier character string that modifies the extracted hypernym from the document;
generating conditions to be applied when a knowledge graph is searched for a hyponym relevant to the extracted hypernym, based on a type and content of the named-entities included in the specified modifier character string;
searching the knowledge graph for the hyponym in accordance with the generated conditions; and
associating the extracted hypernym with the hyponym found in the search.

16. An information processing apparatus comprising a control unit configured to perform processing including:
extracting named-entities that include a hypernym from a lookup query;
specifying a modifier character string that modifies the extracted hypernym from the lookup query;
generating conditions to be applied when a knowledge graph is searched for a hyponym relevant to the extracted hypernym, based on a type and content of the named-entities included in the specified modifier character string;
searching the knowledge graph for the hyponym in accordance with the generated conditions; and
setting the extracted hypernym and the hyponym found in the search as lookup keywords for when performing a lookup for a document according to the lookup query.

17. An information processing system comprising:
an extraction unit for extracting named-entities that include a hypernym from a document;
a specifying unit for specifying a modifier character string that modifies the extracted hypernym from the document;
a generation unit for generating conditions to be applied when a knowledge graph is searched for a hyponym relevant to the extracted hypernym, based on a type and content of the named-entities included in the specified modifier character string;
a search unit for searching the knowledge graph for the hyponym in accordance with the generated conditions; and
an association unit for associating the extracted hypernym with the hyponym found in the search.

18. An information processing system comprising:
an extraction unit for extracting named-entities that include a hypernym from a lookup query;
a specifying unit for specifying a modifier character string that modifies the extracted hypernym from the lookup query;
a generation unit for generating conditions to be applied when a knowledge graph is searched for a hyponym relevant to the extracted hypernym, based on a type and content of the named-entities included in the specified modifier character string;
a search unit for searching the knowledge graph for the hyponym in accordance with the generated conditions; and
a lookup unit for setting the extracted hypernym and the hyponym found in the search as lookup keywords for when performing a lookup for a document according to the lookup query.
